(19) Europäisches Patentamt
European Patent Office
Office européen des brevets

(11) EP 4 372 421 A1

(12) EUROPEAN PATENT APPLICATION
published in accordance with Art. 153(4) EPC

(43) Date of publication:
22.05.2024 Bulletin 2024/21

(51) International Patent Classification (IPC):
G01S 17/93 (2020.01)

(21) Application number: 22840963.7

(52) Cooperative Patent Classification (CPC):
G01S 7/484; G01S 17/10; G01S 17/88; G01S 17/93

(22) Date of filing: 17.03.2022

(86) International application number:
PCT/CN2022/081306

(87) International publication number:
WO 2023/284318 (19.01.2023 Gazette 2023/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.07.2021 CN 202110808017

(71) Applicant: Hesai Technology Co., Ltd.
Shanghai 201821 (CN)

(72) Inventors:
• WANG, Chenluan
Shanghai 201821 (CN)

• ZHU, Xuezhou
Shanghai 201821 (CN)
• YANG, Jin
Shanghai 201821 (CN)
• LIU, Xugang
Shanghai 201821 (CN)
• XIANG, Shaoqing
Shanghai 201821 (CN)

(74) Representative: Appelt, Christian W.
Boehmert & Boehmert
Anwaltspartnerschaft mbB
Pettenkoferstrasse 22
80336 München (DE)

(54) **DETECTION METHOD OF LASER RADAR, TRANSMITTING UNIT AND LASER RADAR**

(57) The embodiments of this disclosure provide a detection method for a LiDAR. The detection method includes: S11: obtaining detection data of K detection sweeps in a detection cycle, the detection data includes time information and intensity information corresponding to the time information, the detection cycle includes N detection sweeps, N is an integer greater than 1, K is an integer, and $1 \leq K < N$; and S12: changing a light-emitting scheme of a laser during the $(K + 1)^{th}$ to $N^{th}$ detection sweeps in the detection cycle based on the detection data of the K detection sweeps. The FOV range where an obstacle exists is identified through a certain number of initial detection sweeps, and at least one of the transmitting-end scheme or the receiving-end scheme are changed accordingly during subsequent detection sweeps or the next detection to reduce the power consumption within the FOV range where no obstacle exists and appropriately increase the energy within the sub-fields of view and time slice range where an obstacle exists, thereby improving the signal-to-noise ratio and the ranging capability.

<u>10</u>

S11: obtain detection data of K detection sweeps in detection cycle, wherein detection data includes time information and intensity information corresponding to time information, detection cycle includes N detection sweeps, N is integer greater than 1, K is integer, and $1 \leq K < N$

S12: change light-emitting scheme of laser during $(K + 1)^{th}$ to $N^{th}$ detection sweeps in detection cycle based on detection data of K detection sweeps

S13-B: change detection window of detector based on field of view of obstacle during $(K + 1)^{th}$ to $N^{th}$ detection sweeps to obtain detection data of detector within detection window

FIG. 1B

**Description**

## TECHNICAL FIELD

This disclosure relates to the field of photoelectric detection and in particular, to a detection method for LiDARs, a transmitter unit, and a LiDAR.

## BACKGROUND

A LiDAR typically includes a transmitter unit, a receiver unit, and a signal processor unit. The transmitter unit can transmit a detection laser beam to a three-dimensional environment surrounding the LiDAR. The detection laser beam diffusely reflected on an obstacle in the three-dimensional environment, and part of the echo returns to the LiDAR. The receiver unit receives the echo and converts the echo into an electrical signal. The signal processor unit receives the electrical signal and calculates ranging information of the obstacle, such as the distance, orientation, reflectivity, or the like.

Typically, in the entire detection field of view ("FOV") of the LiDAR, in particular, in a detection cycle (which can include a process of multiple transceiving detections), obstacles appear only in certain distance ranges and certain FOV ranges. If no obstacle is detected in a certain region in the FOV, and the LiDAR still transmits the detection laser beam during the remaining detections in the detection cycle, energy can be wasted. The transmitter unit transmits the detection laser beam, the corresponding receiver unit always is ON within a predetermined detection window range to receive the possible echo of the detection laser beam reflected by an obstacle, and the receiver unit and the signal processor unit receive and process a large number of ambient light signals from the surrounding regions. The receiver unit needs to respond to the ambient light, resulting in power consumption and static power consumption, and the signal processor unit also wastes resources to read and process the detection data, which causes great power consumption and a reduction in the signal-to-noise ratio.

The content disclosed in this Background section is merely techniques known to the applicants and does not necessarily represent the existing technology in the art.

## SUMMARY

In view of at least one disadvantage of the existing technology, this disclosure provides a detection method for a LiDAR. The detection method includes:

S11: obtaining detection data of K detection sweeps in a detection cycle, the detection cycle includes N detection sweeps, N is an integer greater than 1, K is an integer, and $1 \leq K < N$; and
S12: changing a light-emitting scheme of a laser during the $(K + 1)^{th}$ to $N^{th}$ detection sweeps in the detection cycle based on the detection data of the K detection sweeps.

Based on an aspect of this disclosure, the step S12 includes:

S121: identifying a FOV where an obstacle exists based on the detection data of the K detection sweeps; and
S122: for a FOV where no obstacle exists, controlling the laser corresponding to the FOV during the $(K + 1)^{th}$ to $N^{th}$ detection sweeps in the detection cycle using one or more of the following:

not transmitting a detection pulse;
controlling the laser to transmit a detection pulse at reduced power; and
controlling part of the lasers to transmit a detection pulse.

Based on an aspect of this disclosure, the detection method further includes at least one of: determining a distance or a reflectivity of the obstacle based on the detection data of the K detection sweeps and detection data of the $(K + 1)^{th}$ to $N^{th}$ detection sweeps, and calibrating at least one of the distance or the reflectivity of the obstacle based on the detection data of the $(K + 1)^{th}$ to $N^{th}$ detection sweeps.

Based on an aspect of this disclosure, the step S122 further includes: changing transmission power of the laser corresponding to the FOV where the obstacle exists during the $(K + 1)^{th}$ to $N^{th}$ detection sweeps in the detection cycle based on at least one of intensity information or reflectivity information of the K detection sweeps.

Based on an aspect of this disclosure, the detection method further includes: when the intensity information is greater than a threshold, reducing the transmission power of the laser corresponding to the FOV where the obstacle exists during a next detection sweep; and

when the intensity is less than the threshold, increasing the transmission power of the laser corresponding to the FOV where the obstacle exists during the next detection sweep.

Based on an aspect of this disclosure, the LiDAR includes multiple channels, each of the channels includes a laser and a corresponding detector for detection in a particular FOV range, and the detection method further includes:

acquiring a region of interest in a FOV of the LiDAR; and
for a laser of a channel whose FOV range falls within the region of interest, increasing transmission power of the laser in step S11.

Based on an aspect of this disclosure, the detection method further includes: increasing the transmission power of the laser, and decreasing a value of K.

Based on an aspect of this disclosure, the LiDAR includes multiple channels, each of the channels includes a laser and a corresponding detector for detection in a particular FOV range, and the detection method further includes:

acquiring a region of interest in a FOV of the LiDAR; and
for a laser of a channel whose FOV range falls within the region of interest, increasing a value of N.

Based on an aspect of this disclosure, the detection data is stored in a first storage manner or a second storage manner, the first storage manner includes: storing the intensity information based on a weight of the time information at a first time precision, the first time precision is a time interval between any two adjacent first time scales and M times a time resolution of detection data of the LiDAR, M>1, and the weight is associated with a time interval between the time information and at least one first time scale; and the second storage manner includes: storing the intensity information based on the time resolution of the LiDAR.

Based on an aspect of this disclosure, a first set of detection data is stored in the first storage manner, and a second set of detection data is stored in the second storage manner.

Based on an aspect of this disclosure, the weight includes a first weight and a second weight, the first weight is associated with a time interval between the time information and one of adjacent first time scales, the second weight is associated with a time interval between the time information and the other one of adj acent first time scales, and the first storage manner includes: storing the intensity information based on the first weight and the second weight, respectively, at the first time precision.

Based on an aspect of this disclosure, the detection method further includes:
S13: changing a detection window of a detector based on a FOV of the obstacle during the $(K + 1)^{th}$ to $N^{th}$ detection sweeps to obtain detection data of the detector within the detection window.

Based on an aspect of this disclosure, the step S13 further includes at least one of:

activating the detector only within the detection window; or
maintaining the detector activated, and reading only the detection data of the detector within the detection window.

This disclosure also provides a transmitter unit for a LiDAR. The transmitter unit includes:

a laser, configured to transmit a pulse; and
a drive unit, coupled to the laser and configured to be capable of driving the laser to transmit the pulse to measure at least one of a distance or a reflectivity of an obstacle, the drive unit is further configured to perform the following operations:

S11: obtaining detection data of K detection sweeps in a detection cycle, the detection data includes time information and intensity information corresponding to the time information, the detection cycle includes N detection sweeps, N is an integer greater than 1, K is an integer, and $1 \leq K < N$; and
S12: changing a light-emitting scheme of the laser during the $(K + 1)^{th}$ to $N^{th}$ detection sweeps in the detection cycle based on the detection data of the K detection sweeps.

Based on an aspect of this disclosure, the operation S12 further includes:

S121: identifying a FOV where an obstacle exists based on the detection data of the K detection sweeps; and
S122: for a FOV where no obstacle exists, controlling the laser corresponding to the FOV during the $(K + 1)^{th}$ to $N^{th}$ detection sweeps in the detection cycle using one or more of the following:

not transmitting a detection pulse;

controlling the laser to transmit a detection pulse at reduced power; and
when multiple lasers correspond to a current detection, controlling part of the lasers to transmit a detection pulse.

This disclosure also provides a LiDAR. The LiDAR includes:
a transmitter unit, including:

a laser, configured to transmit a pulse;
a drive unit, coupled to the laser and configured to be capable of driving the laser to transmit the pulse to measure at least one of a distance or a reflectivity of an obstacle, the detection cycle includes N detection sweeps, and N is an integer greater than 1;
a receiver unit, configured to receive an echo of the pulse reflected by the obstacle and convert the echo into an electrical signal; and
a signal processor unit, coupled to the transmitter unit and the receiver unit and configured to generate detection data of each detection sweep based on the electrical signal, the detection data includes time information and intensity information corresponding to the time information;
the drive unit is configured to perform the following operations:

S11: obtaining detection data of K detection sweeps in a detection cycle, K is an integer, and $1 \leq K < N$; and
S12: changing a light-emitting scheme of the laser during the $(K + 1)^{th}$ to $N^{th}$ detection sweeps in the detection cycle based on the detection data of the K detection sweeps.

Based on an aspect of this disclosure, the operation S12 further includes:

S121: identifying a FOV where an obstacle exists based on the detection data of the K detection sweeps; and
S122: for a FOV where no obstacle exists, controlling the laser corresponding to the FOV during the $(K + 1)^{th}$ to $N^{th}$ detection sweeps in the detection cycle using one or more of the following:

not transmitting a detection pulse;
controlling the laser to transmit a detection pulse at reduced power; and
when multiple lasers correspond to a current detection, controlling part of the lasers to transmit a detection pulse.

Based on an aspect of this disclosure, the signal processor unit is configured to: determine at least one of a distance or a reflectivity of the obstacle based on the detection data of the K detection sweeps and detection data of the $(K + 1)^{th}$ to $N^{th}$ detection sweeps, and calibrate at least one of the distance or the reflectivity of the obstacle based on the detection data of the $(K + 1)^{th}$ to $N^{th}$ detection sweeps.

Based on an aspect of this disclosure, the drive unit is further configured to: change transmission power of the laser corresponding to the FOV where the obstacle exists during the $(K + 1)^{th}$ to $N^{th}$ detection sweeps in the detection cycle based on at least one of intensity information or reflectivity information of the K detection sweeps.

Based on an aspect of this disclosure, the drive unit is further configured to: when an intensity is greater than a threshold, reduce the transmission power of the laser corresponding to the FOV where the obstacle exists during a next detection sweep; and when the intensity is less than the threshold, increase the transmission power of the laser corresponding to the FOV where the obstacle exists during the next detection sweep.

Based on an aspect of this disclosure, the LiDAR includes multiple channels, each of the channels includes a laser and a corresponding detector for detection in a particular FOV range, and the drive unit is further configured to:

acquire a region of interest in a FOV of the LiDAR; and
for a laser of a channel whose FOV range falls within the ROI, increase transmission power of the laser in the operation S11.

Based on an aspect of this disclosure, the drive unit is configured to: increase the transmission power of the laser and decrease a value of K in the operation S11.

Based on an aspect of this disclosure, the LiDAR includes multiple channels, each of the channels includes a laser and a corresponding detector for detection in a particular FOV range, and the drive unit is further configured to:

acquire a region of interest in a FOV of the LiDAR; and
for a laser of a channel whose FOV range falls within the ROI, increase a value of N.

Based on an aspect of this disclosure, the detection data is stored in a first storage manner or a second storage manner, the first storage manner includes: storing the intensity information based on a weight of the time information at a first time precision, the first time precision is a time interval between any two adjacent first time scales and M times a time resolution of detection data of the LiDAR, M>1, and the weight is associated with a time interval between the time information and at least one first time scale; and the second storage manner includes: storing the intensity information based on a time resolution of the LiDAR.

Based on an aspect of this disclosure, a first set of detection data is stored in the first storage manner, and a second set of detection data is stored in the second storage manner.

Based on an aspect of this disclosure, the weight includes a first weight and a second weight, the first weight is associated with a time interval between the time information and one of adjacent first time scales, the second weight is associated with a time interval between the time information and the other one of adjacent first time scales, and the first storage manner includes: storing the intensity information based on the first weight and the second weight, respectively, at the first time precision.

Based on an aspect of this disclosure, the drive unit is further configured to perform the following operation: S13: changing a detection window of a detector based on a FOV of the obstacle during the $(K + 1)^{th}$ to $N^{th}$ detection sweeps to obtain detection data of the detector within the detection window.

Based on an aspect of this disclosure, the operation S13 further includes at least one of:

activating the detector only within the detection window; or
maintaining the detector activated, and reading only the detection data of the detector within the detection window.

Based on the technical schemes of this disclosure, the presence or absence of an obstacle in the FOV range as well as the approximate distance information between the existing obstacle and a LiDAR is obtained through a certain number of initial detection sweeps in a detection cycle, and the transmitting-end scheme is changed accordingly during subsequent detection sweeps or the next detection (possibly the next detection channel), for example, only driving the lasers corresponding to the FOV where the obstacle exists to emit light, so that the power consumption in the FOV range where no obstacle exists can be reduced, thereby reducing the power consumption of the LiDAR. In addition, the receiving-end scheme can be changed accordingly, for example, only processing the echo data within the detection window corresponding to the distance range where the obstacle exists, thereby improving the signal-to-noise ratio and the ranging capability.

## BRIEF DESCRIPTION OF THE DRAWINGS

The drawings forming a part of this disclosure are used to provide a further understanding of this disclosure. The example embodiments and descriptions thereof in this disclosure are used to explain this disclosure and do not form an undue limitation on this disclosure. In the drawings:

FIG. 1A shows a flowchart of a transmitting-end change scheme of a detection method, based on an embodiment of this disclosure.
FIG. 1B shows a flowchart of a transmitting-end and receiving-end change scheme of a detection method, based on an embodiment of this disclosure.
FIG. 2 shows a flowchart of step S12 of the detection method, based on embodiments (FIG. 1A and FIG. 1B) of this disclosure.
FIG. 3 shows an example of an intensity information-time information curve.
FIG. 4 (A), FIG. 4 (B), and FIG. 4 (C) show schematic diagrams of a sweep scene, sub-FOV, and laser arrangement of a LiDAR, based on embodiment 1 of this disclosure respectively.
FIG. 5 shows a schematic diagram of a time-sharing time slices of time of flight, based on embodiment 1 of this disclosure.
FIG. 6 (A), FIG. 6 (B), and FIG. 6 (C) show schematic diagrams of sub-FOV, laser arrangement, and first 300 sweeps in a detection cycle of a LiDAR, based on embodiment 1 of this disclosure, respectively.
FIG. 7 (A), FIG. 7 (B), and FIG. 7 (C) show schematic diagrams of sub-FOV, laser arrangement, and the last 100 sweeps in a detection cycle of a LiDAR, based on embodiment 1 of this disclosure, respectively.
FIG. 8 shows schematic diagrams of sub-FOV, laser arrangement, and the accumulation of a total of 400 detection results in a detection cycle of a LiDAR, based on embodiment 1 of this disclosure, respectively.
FIG. 9 shows a detection flowchart, based on embodiment 1 of this disclosure.
FIG. 10 shows a detector unit, based on embodiment 1 of this disclosure.
FIG. 11 shows a data storage method of the existing technology.
FIGS. 12 and 13 show specific schematic diagrams of a storage manner, based on an embodiment of this disclosure.
FIG. 14 (A), FIG. 14 (B), and FIG. 14 (C) show schematic diagrams of sub-FOV, laser arrangement, and a storage manner of a LiDAR, based on embodiment 1 of this disclosure.

FIG. 15 shows a schematic diagram of the comparison of a rough scale and a fine scale, based on an embodiment of this disclosure.

FIG. 16 shows a block diagram of a LiDAR, based on an embodiment of this disclosure.

## DETAILED DESCRIPTION

In the following, some example embodiments are described. The described embodiments can be changed in various different ways without departing from the spirit or scope of this disclosure, as would be apparent to those skilled in the art. Accordingly, the drawings and descriptions are to be regarded as illustrative and not restrictive in nature.

In the description of this disclosure, it needs to be understood that the orientation or position relations represented by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of this disclosure and simplification of the description, instead of indicating or suggesting that the represented devices or elements must be oriented specifically, or configured or operated in a specific orientation. Thus, such terms should not be construed to limit this disclosure. In addition, such terms as "first" and "second" are only used for the purpose of description, rather than indicating or suggesting relative importance or implicitly indicating the number of the represented technical features. Accordingly, features defined with "first" and "second" can, expressly or implicitly, include one or more of the features. In the description of this disclosure, "plurality" means two or more, unless otherwise defined explicitly and specifically.

In the description of this disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this can cover direct contact between the first and second features, or contact via another feature therebetween, other than the direct contact. Furthermore, if a first feature is "on", "above", or "over" a second feature, this can cover the case that the first feature is right above or obliquely above the second feature, or just indicate that the level of the first feature is higher than that of the second feature. If a first feature is "beneath", "below", or "under" a second feature, this can cover the case that the first feature is right below or obliquely below the second feature, or just indicate that the level of the first feature is lower than that of the second feature.

The disclosure provides many different embodiments or examples. To simplify the disclosure, the following gives the description of the parts and arrangements embodied in some examples. They are only for the example purpose, not intended to limit this disclosure. Besides, this disclosure can repeat at least one of a reference number or reference letter in different examples, and such repeat is for the purpose of simplification and clarity, which does not represent any relation among at least one of various embodiments or various arrangements as discussed. In addition, this disclosure provides examples of various example processes and materials, but those skilled in the art can also be aware of application of at least one of other processes or other use of other materials.

Typically, in the entire detection FOV of a LiDAR, in particular, in a detection cycle (which can include a process of multiple transceiving detections or detection sweeps), obstacles only appear in certain distance ranges and certain FOV ranges. If no obstacle is detected in a certain region in the FOV and the LiDAR continues to perform detection in the region during the remaining detection sweeps in the detection cycle, energy can be wasted unnecessarily. The transmitter unit transmits a detection laser beam, the corresponding receiver unit always is ON within a predetermined detection window range to receive the possible echo of the detection laser beam reflected by an obstacle, and the receiver unit and the signal processor unit receive and process a large number of ambient light signals from the surrounding regions. The receiver unit needs to respond to the ambient light, resulting in power consumption and static power consumption, and the signal processor unit also wastes resources to read and process the detection data, which causes great power consumption and a reduction in the signal-to-noise ratio.

For reducing power consumption, this disclosure designs a detection method for a LiDAR, a transmitter unit, and a LiDAR. In a detection cycle, a FOV and a distance range where an obstacle is located are determined by using detection data obtained through a number of initial detection sweeps, and a transmitting scheme of at least one of a transmitting end or a detection scheme of a receiving end are changed accordingly during the remaining detection sweeps in the detection cycle based on the detection data.

Embodiments of this disclosure are described in detail in conjunction with the drawings, and it should be understood that the embodiments described hereinafter are only intended to describe and explain this disclosure and not to limit this disclosure.

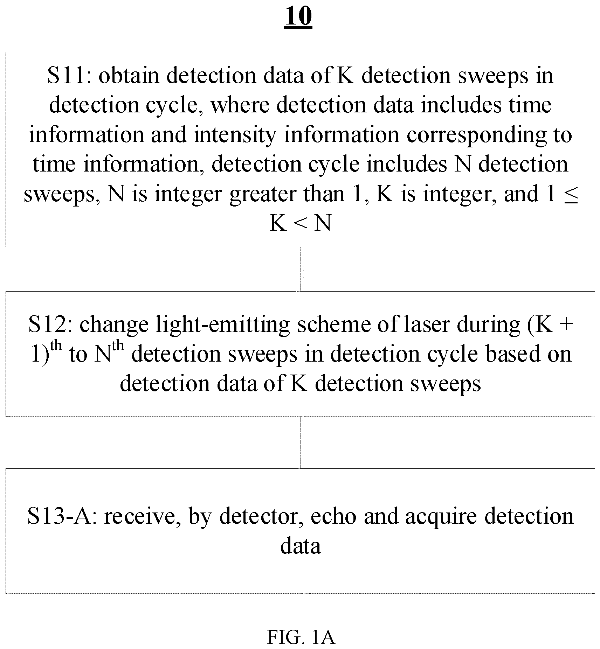

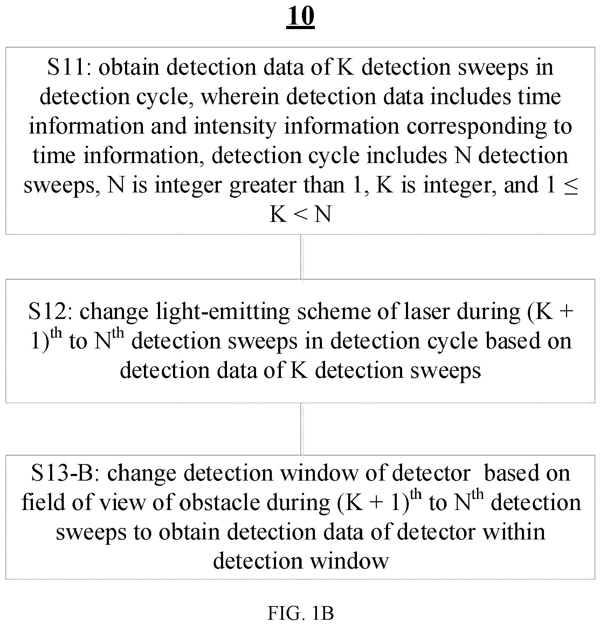

This disclosure relates to a detection method 10 for a LiDAR. For example, referring to FIG. 1A and FIG. 1B, the detection method 10 includes steps S11 and S12.

In step S 11, detection data of K detection sweeps in a detection cycle is obtained.

In this disclosure, one detection cycle includes a process of multiple transceiving detections or detection sweeps. Through one detection cycle, one point on a point cloud map can be obtained (the dimension of the point and the distance from the point to an adjacent point are related to the specific type and the operation mode of the LiDAR, which are not limited in this disclosure). The detection data of the detection sweeps includes time information and intensity information corresponding to the time information, which correspondingly represent distance information and reflectivity information of an obstacle, respectively. In other words, at least one of the distance or reflectivity is measured based on a mechanism of multiple repeated detection sweeps. One measurement of at least one of a distance or reflectivity refers to the completion of detection of one point in a three-dimensional environment (or one point on an obstacle), and finally, one point in a LiDAR's point cloud can be generated as an example.

To complete the measurement of at least one of the distance or the reflectivity of this point, a laser of the LiDAR can perform transmission, and the corresponding detector performs reception. The above-mentioned single transmission-reception process is referred to as one detection sweep, and multiple such detection sweeps form one detection cycle. The data of the multiple detection sweeps are accumulated, and then at least one of the distance or the reflectivity information are obtained by processing the accumulated results.

It should be noted that it is emphasized here that the information of one point in a point cloud map can be obtained through one detection cycle, this is just for the purpose of illustrating that to obtain or determine the distance information and the reflectivity information of one point, the operation of transceiving detection needs to be performed multiple times and the data obtained after the multiple detections is synthesized for further processing. However, all points in the entire FOV of the LiDAR can be detected simultaneously; the points can also be grouped, and points in the same group can be detected simultaneously. The so-called simultaneous detection means that these lasers and detectors of a group perform the operation of transceiving detection in parallel.

When one measurement (one detection cycle) includes N (e.g., N = 400) detection sweeps, the total N detection sweeps are divided into first K (e.g., K = 300, which can also be 100 or 200, and the division ratio is not limited in this disclosure) detection sweeps and the $(K + 1)^{th}$ to $N^{th}$ detection sweeps.

In step S11, the detection data of the first K detection sweeps is first obtained, the detection data includes time information of each detection sweep and intensity information corresponding to the time information, N is an integer greater than 1, K is an integer, and $1 \leq K < N$. For each detection sweep, the laser transmits a detection laser pulse, the detector receives an echo, and the signal processor circuit can obtain the time at which the detector receives the echo or the time of flight of the echo, i.e., the above-mentioned time information. The time information reflects the relative distance between the obstacle and the LiDAR. At the same time, the signal processor circuit can obtain the intensity of the echo received by the detector, which, for example, can be characterized by a photon number or signal amplitude, or the like, i.e., the above-mentioned intensity information. The intensity information reflects the reflectivity of the obstacle.

In step S12, a light-emitting scheme of a laser during the $(K + 1)^{th}$ to $N^{th}$ detection sweeps in the detection cycle is changed based on the detection data of the first K detection sweeps.

For example, if an obstacle is identified only in certain sub-FOVs of the LiDAR based on the first K detection sweeps, the lasers corresponding to these sub-FOVs where the obstacle exists normally transmit laser detection pulses during the subsequent $(K + 1)^{th}$ to $N^{th}$ detection sweeps in the detection cycle (the lasers are driven in the same manner as in the first K detection sweeps). For lasers corresponding to sub-FOVs where no obstacle exists, during the $(K + 1)^{th}$ to $N^{th}$ detection sweeps, the light-emitting scheme of these lasers is changed accordingly, for example, not transmitting a laser detection pulse or transmitting the laser detection pulse in a relatively "idle" way (e.g., the light-emitting power is reduced) or in an "inactive" way (e.g., the light-emitting frequency is reduced).

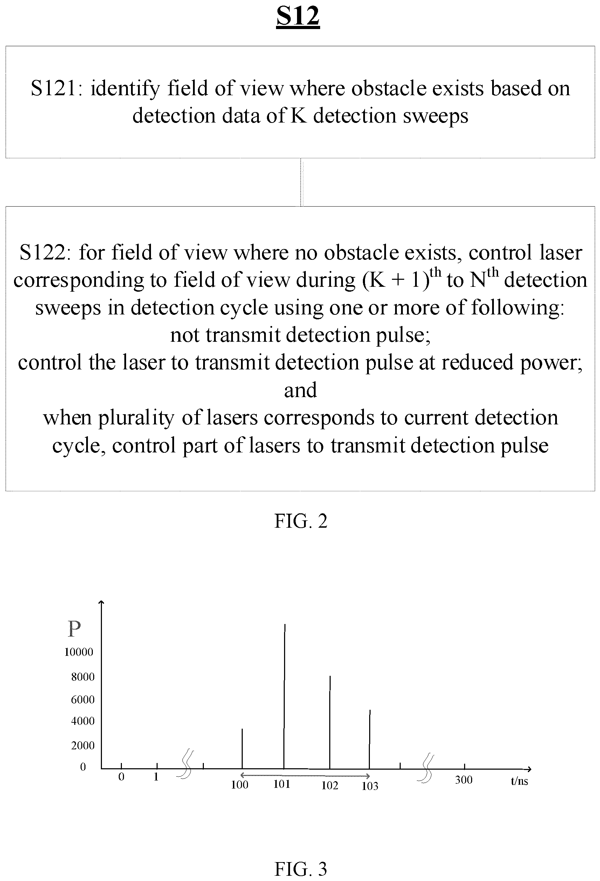

FIG. 2 shows a specific implementation of step S12 of an embodiment of this disclosure, that is, how to change the light-emitting scheme of the laser during the $(K + 1)^{th}$ to $N^{th}$ detection sweeps in the detection cycle based on the detection data of the first K detection sweeps. For example, referring to FIG. 2, the step S12 includes steps S1212 and S122.

In step S121, a FOV where an obstacle exists is determined based on the detection data of the first K detection sweeps.

After the detection data of the first K detection sweeps is obtained, the detection data of the first K detection sweeps can be accumulated, and a curve of intensity information-time information can be obtained. For example, referring to FIG. 3, for the curve, the horizontal axis can be the time of flight ("TOF"), and the vertical axis can be the intensity information of the echo. The LiDAR can have a noise threshold that is predetermined or dynamically changed, and the noise threshold can be related to the intensity of the current ambient light. For the region where the intensity information is higher than the noise threshold, an obstacle exists in the FOV corresponding to the region; otherwise, when the intensity information is lower than the noise threshold, no obstacle exists in the FOV.

In step S122, for a laser corresponding to a FOV where no obstacle exists, one or more of the following manners are used during the $(K + 1)^{th}$ to $N^{th}$ detection sweeps in the detection cycle to reduce the power consumption of the transmitting end:

(1) controlling the laser corresponding to the FOV not to transmit a detection pulse;
(2) controlling the laser corresponding to the FOV to transmit a detection pulse at a power lower than that in the first K detection sweeps;
(3) when multiple lasers correspond to the measurement of the FOV, controlling part of the lasers to transmit a detection pulse. In other words, of multiple lasers corresponding to the sub-FOV, only part of the lasers transmits a detection pulse, that is, the density of the light-emitting lasers is relatively sparse.

By using the above-mentioned manners, the laser can be controlled to emit light in a relatively "idle" way within the FOV range where no obstacle exists, and specifically, the laser can be controlled to emit light or not and the power for emitting light can be changed, thereby reducing the power consumption of the LiDAR.

The LiDAR typically includes multiple lasers and multiple detectors, one (or more) laser(s) corresponds to one (or more) detector(s) to form a detection channel, and one detection channel corresponds to a particular FOV range. The control of the light-emitting scheme of the laser is described above through step S11 and step S12, and then in step S13-A, referring to in FIG. 1A, the detector receives an echo and acquires detection data. Preferably, in step S13-B, referring to FIG. 1B, the detector at the receiving end is controlled or the receiving scheme at the receiving end is controlled by at least one of the following:

(1) activating the detector only within a detection window corresponding to a detection distance; or
(2) maintaining the detector corresponding to the FOV activated, and reading only the detection data of the detector within the detection window.

For example, for a detection channel corresponding to the FOV where no obstacle exists, during the $(K + 1)^{th}$ to $N^{th}$ detection sweeps in the detection cycle, the detector of the detection channel is turned off or is controlled to operate at low sensitivity (at a low operation voltage), or when the detection channel has multiple detectors, only part of the detectors are controlled to perform detection. In addition, a signal processor circuit (e.g., a time-to-digital converter) at the receiving end of the LiDAR can also be controlled so that the signal processor circuit does not perform signal processor for the FOV where no obstacle exists or only processes data obtained within the detection window corresponding to the detection distance, thereby further reducing the power consumption of the LiDAR.

Relative to the FOV range where an obstacle exists, the receiving end can also be relatively "idle" within the FOV range where no obstacle exists. As a result, the power consumption caused by the response of the detector under the trigger of ambient light and static power consumption can be reduced. The detailed control method is further described in conjunction with embodiments in subsequent paragraphs.

In summary, in the technical solutions of this disclosure, the position (which can specifically include the FOV and the distance, a specified location in the field of view, and further specifically including a horizontal angle and a vertical angle) of an obstacle is determined through a certain number of initial detection sweeps, and at least one of the transmitting-end scheme or the receiving-end scheme are changed accordingly during subsequent detection sweeps or the next detection, thereby reducing the power consumption of the LiDAR.

In a preferred embodiment of this disclosure, the detection method 10 further includes the following steps: a rough position of the obstacle is determined based on the detection data of the K detection sweeps, the detection data of the $(K + 1)^{th}$ to $N^{th}$ detection sweeps after changing the light-emitting scheme is accumulated with a histogram obtained from the first K detection sweeps to obtain the detection data of N detection sweeps, at least one of the distance or reflectivity of the obstacle are preliminarily determined, and at least one of the preliminary distance or reflectivity of the obstacle are further calibrated based on the detection data of the $(K + 1)^{th}$ to $N^{th}$ detection sweeps, and the calibrated result is taken as at least one of the distance or reflectivity information of the obstacle.

The technical solutions of the detection method 10 are described above and are described in detail below through Embodiment one.

Embodiment one of this disclosure performs the measurement based on the TOF method. For the entire detectable FOV of the LiDAR, K detection sweeps can be first performed to obtain detection data, the signal processor unit of a readout circuit processes the detection data, and the orientation of the obstacle as well as the position of the obstacle can be determined based on the detection data. For more accurate detection and positioning, the detection FOV can be divided into multiple sub-FOVs (to characterize the orientation of the obstacle), and the TOF can also be divided into multiple time slices (to characterize the position of the obstacle). The light-emitting scheme during the $(K + 1)^{th}$ to $N^{th}$ detection sweeps can then be changed, and finally, the detection result of the detection cycle is obtained based on the detection data of the N detection sweeps.

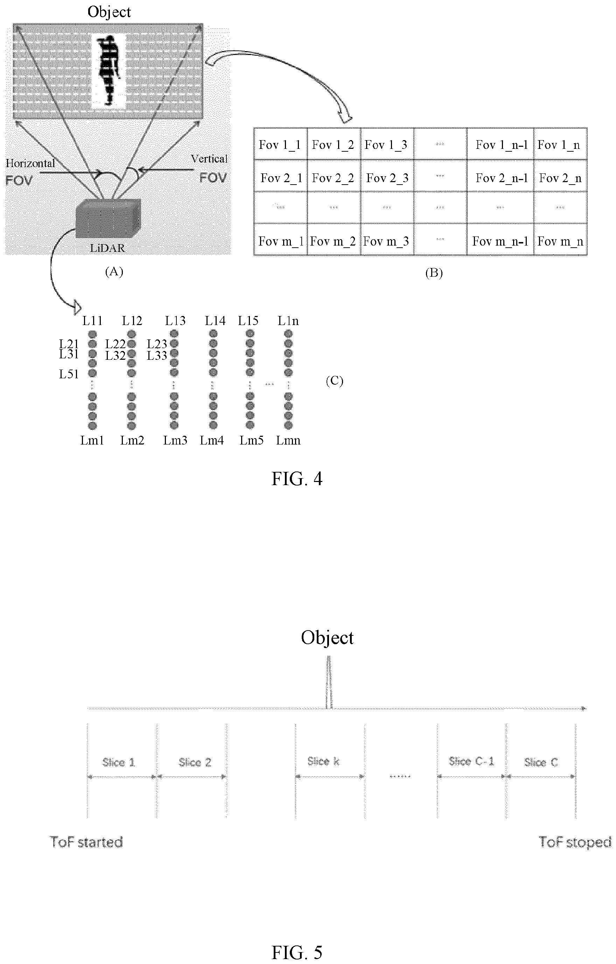

The division of sub-FOVs is shown in FIG. 4. FIG. 4 (A) shows a detection sweeping scenario of the LiDAR and a perspective schematic view of the detection FOV. The detection FOV is divided into sub-FOVs of m rows and n columns in a horizontal direction and a vertical direction, i.e., sub-FOV Fov x_y, where $x \in (1, m)$, and $y \in (1, n)$. FIG. 4 (B) shows a plan view of the detection FOV represented by a matrix, where the detection FOV is divided into m*n sub-FOVs: Fov 1_1, Fov 1_2, Fov 1_3, ..., and Fov m_n. FIG. 4 (C) is a schematic diagram of the arrangement of the lasers within the LiDAR (the figure is for the purpose of illustration only here, and whether the lasers are line-arrayed or area-arrayed or are one- or two-dimensional is not limited herein). Each sub-FOV corresponds to, for example, one laser (e.g., a vertical-cavity surface-emitting laser ("VCSEL") or an edge-emitting laser ("EEL")). Each sub-FOV is irradiated and detected by the corresponding laser, for example, the sub-FOV Fov 1_1 is irradiated and detected by the laser L11, the sub-FOV Fov 1_2 is irradiated and detected by the laser L12, ..., and the sub-FOV Fov m_n is irradiated and detected by the laser Lmn. Accordingly, the receiving end also has detectors that are in one-to-one correspondence with the lasers (by way of example only, the lasers and detectors can actually be one-to-many correspondence or many-to-one correspondence, which is not limited here) for converting the echo into an electrical signal and has a readout circuit to receive and process the electrical signal. This disclosure does not limit the correspondence between the sub-FOVs and the lasers, for example, one sub-FOV can correspond to multiple lasers or one laser can correspond to multiple sub-FOVs; this disclosure also does not limit the correspondence between the lasers and the photodetectors, for example, multiple lasers can correspond to one detector; this disclosure also does not limit the correspondence between the photodetectors and the readout circuit, for example, the readout circuit can be reused in case of row scanning or column scanning.

The division of the time slices is shown in FIG. 5. Each LiDAR or each detection channel typically has a predetermined maximum detection distance dmax, the maximum time of flight TOF (2dmax/c, where c is the speed of light) can be calculated correspondingly. For the receiving end, the time point at which the corresponding laser starts to emit light can be taken as the starting time point of the TOF TOF_started (which can be slightly earlier than the light-emitting time point of the laser since the detector requires a certain switching or start-up time), the time point at which the transmitted pulse is received by the receiving end after reflected by an obstacle located the maximum distance dmax can be taken as the stopping time point of the TOF TOF_stopped, the ranging window = |TOF_stopped - TOF_started|, and in such a time window, the receiving end receives and measures the echo. Taking both resolution and the amount of signal to be processed into consideration, the time of flight TOF can be divided into C time slices Slice, as shown in FIG. 5, and finally time slices Slice 1, Slice 2, ..., Slice C-1, and Slice C are formed, where C is an integer greater than 1.

After the sub-FOVs and the time slices are divided based on the method shown in FIGS. 4 and 5, K detection sweeps are first performed, and detection data (including time information and intensity information) are accumulated to obtain a histogram of the K detection sweeps, as shown in FIG. 3; the signal processor unit of the readout circuit performs a basic operation on the histogram to obtain the following information: identifying sub-FOVs where an obstacle exists; and for the obstacle present in the FOV, the rough position (e.g., the distance from the LiDAR, which can be represented by the distance or the TOF) of the obstacle is obtained.

Preferably, Table 1 is generated based on the above operation result. Here, Table 1 is a table of m rows and n columns, each cell in the table corresponding to one sub-FOV, and each cell can be filled with single-bit information, such as 0 or 1, indicating whether an obstacle exists in the sub-FOV. For example, for each sub-FOV with 0 filled in the bracket, it is indicated that no obstacle exists in the sub-FOV, and for each sub-FOV with 1 filled in the bracket, it is indicated that an obstacle exists in the sub-FOV. As shown in Fov 2_2 (1), Fov 2_3 (1), Fov 3_2 (1), and Fov 3_3 (1) in the dark cells in Table 1, obstacles are present in these four sub-FOVs.

| Fov 1_1 (**0**) | Fov 1_2 (**0**) | ... | ... | Fov 1_N-1 (**0**) | Fov 1_N (**0**) |
|---|---|---|---|---|---|
| Fov 2_1 (**0**) | Fov 2_2 (**1**) | Fov 2_3 (**1**) | ... | Fov 2_N-1 (**0**) | Fov 2_N (**0**) |
| ... | Fov 3_2 (**1**) | Fov 3_3 (**1**) | ... | ... | ... |
| Fov M_1 (**0**) | Fov M_2 (**0**) | ... | ... | Fov M_N-1 (**0**) | Fov M_N (**0**) |

Table 1

Based on a preferred embodiment of this disclosure, Table 2 corresponding to each sub-FOV is generated based on the above operation result. Multi-bit information is stored in Table 2 for characterizing in which time slice of the C time slices the obstacle is located. For example, the time of flight ("TOF") is divided into multiple time slices, and the time slice where the time of flight corresponding to the obstacle is located is determined; in this way, the distance information can be represented by the number of the time slice shown in FIG. 5 and the number of the slice can be filled in Table 2 of dimension m*n. The number information of the time slice is recorded in the bracket of each sub-FOV; when the bracket in Table 2 is empty, it is indicated that no obstacle exists in the sub-FOV, and when the bracket is filled with slice k, it is indicated that an obstacle exists in the time slice Slice k in the sub-FOV. As shown in Fov 2_2 (slice k), Fov 2_3 (slice k), Fov 3_2 (slice k), and Fov 3_3 (slice k) in the dark cells in Table 2, obstacles are present at a distance of approximately d = c × Slice k/2 in these four sub-FOVs. One multi-bit value is filled in each cell because b bits can divide the time of flight ("TOF") into 2b slices while one bit can divide the time of flight TOF into two slices.

The light-emitting scheme during the (K + 1)th to Nth detection sweeps can be changed based on at least one of Table 1 or Table 2. For example, when no obstacle exists in a sub-FOV, the laser corresponding to the sub-FOV is controlled to not emit light at all, reduce the transmission power or reduce the light-emitting density.

| Fov 1_1 () | Fov 1_2 () | ⋯ | ⋯ | Fov 1_N-1 () | Fov 1_N () |
|---|---|---|---|---|---|
| Fov 2_1 () | Fov 2_2 (slice k) | Fov 2_3 (slice k) | ⋯ | Fov 2_N-1 () | Fov 2_N () |
| ⋯ | Fov 3_2 (slice k) | Fov 3_3 (slice k) | ⋯ | ⋯ | ⋯ |
| Fov M_1 () | Fov M_2 () | ⋯ | ⋯ | Fov M_N-1 () | Fov M_N () |

Table 2

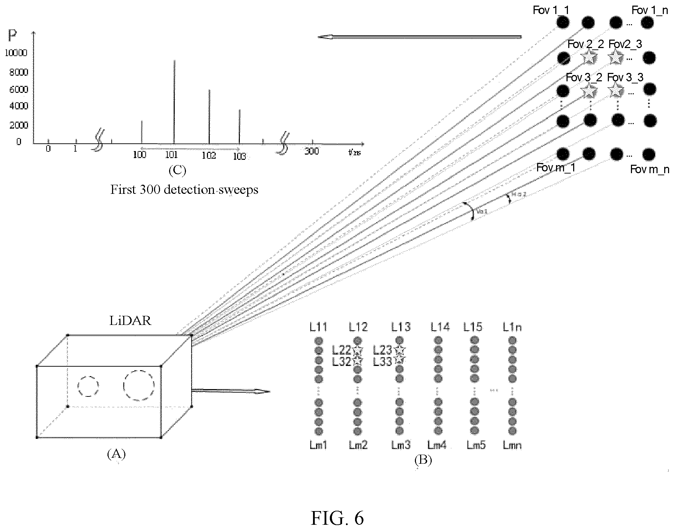

Specifically, as shown in FIG. 6 (B), during the first K measurements (e.g., K = 300), the lasers illuminate the entire FOV (which can be the full FOV detectable by the LiDAR or part of the full FOV, and the FOV range can be different based on the type of the LiDAR, which is not limited here) sequentially (or at one time) based on a specific light-emitting sequence (e.g., the entire area-array laser can simultaneously emit light, or one row or column or several rows or columns can be selected to emit light simultaneously), referring to the upper right corner of FIG. 6 (A); the corresponding detector and readout circuit at the receiving end record the time-intensity information completely and store it as a histogram, referring to in FIG. 6 (C) (which shows the histogram obtained by accumulating the detection data obtained from the first K detection sweeps of one FOV). The specific data storage manner is described in detail below, which can include, for example, rough storage and fine storage.

For example, still referring to FIG. 6, in the detection FOV of the LiDAR shown in the upper right corner of FIG. 6 (A), the star-shaped markers characterize the sub-FOVs Fov 2_2, Fov 2_3, Fov 3_2, and Fov 3_3 where an obstacle exists, and the rough position of the obstacle can be calculated from the histogram obtained from the first K detection sweeps. If the leading-edge method is used, a threshold can be set, the TOF can be calculated based on the time point when the leading edge exceeds the threshold, and the distance of the obstacle can be calculated accordingly. If the centroid method is used, the centroid position can be obtained from the envelope of the histogram, and the distance of the obstacle can be obtained accordingly.

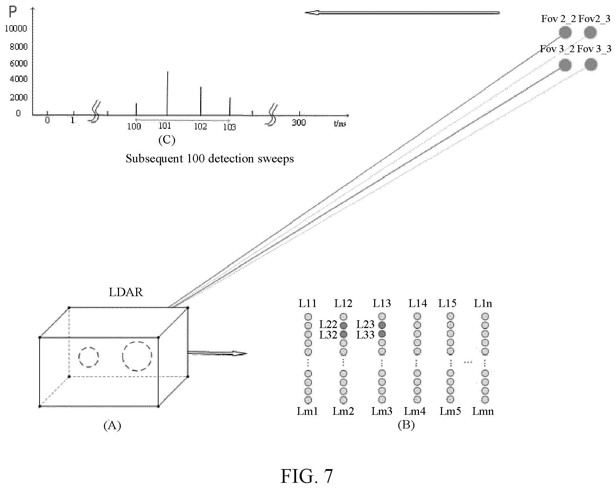

During the subsequent (K + 1)th to Nth detection sweeps (e.g., N = 400, and K = 300), at least one of whether the corresponding laser at the transmitting end emits light or not, or the light-emitting mode are determined based on the values in Table 1. Through such a light-emitting manner, the power consumption for laser transmission can be reduced. Referring to FIG. 7, during the subsequent 100 measurements, the lasers corresponding to the sub-FOVs Fov 2_2, Fov 2_3, Fov 3_2, and Fov 3_3 where an obstacle exists are determined to be sequentially L22, L23, L32, and L33 based on the values in Table 1. The corresponding lasers L22, L23, L32, and L33 (corresponding to the dark gray-filled circles in FIG. 7 (B)) at the transmitting end are determined to emit light, while the other lasers (corresponding to the light gray-filled circles in FIG. 7 (B)) do not emit light, emit light at a relatively low power or emit light at a low density. Through such a light-emitting manner, the power consumption for laser transmission can be reduced.

The controller at the receiving end can additionally control the enabling of the detector with reference to the information in Table 2. During the (K + 1)th to Nth detection sweeps, when the lasers at the transmitting end emit light based on the configuration in Table 1, the detector (e.g., a single-photon avalanche diode ("SPAD")) and the readout circuit at the receiving end need not be ON for the entire time of flight TOF, but only need be ON in the range of the corresponding time slices in Table 2 (time slices Slice 100 to Slice 103 in FIG. 7 (C), or time slice Slice k in FIG. 5). In this way, the power consumption of the receiving end under the trigger of ambient light and the average static power consumption in the standby mode can be greatly reduced.

It is to be noted that Table 1 and Table 2 can be updated when the first K detection sweeps in each detection cycle are completed.

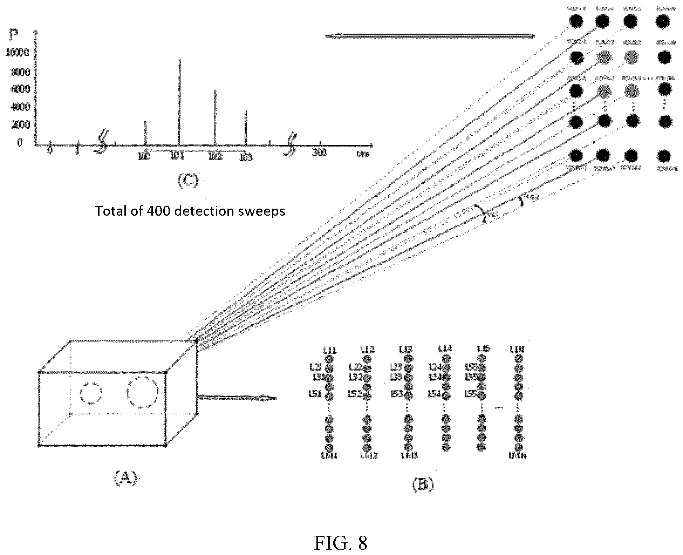

The sub-FOV where an obstacle exists are determined based on the first K detection sweeps, and the detection data during the $(K + 1)^{th}$ to $N^{th}$ detection sweeps is accumulated with the histogram data obtained from the first K detection sweeps to obtain the final data of N repeated detection sweeps, for example, referring to FIG. 8. Based on the histogram data of FIG. 8, the calculation and calibration of the ranging information can be performed based on the centroid method (to calculate the center of gravity of the echo) or the leading-edge method (to calculate the time point at which the leading edge of the echo reaches a predetermined threshold).

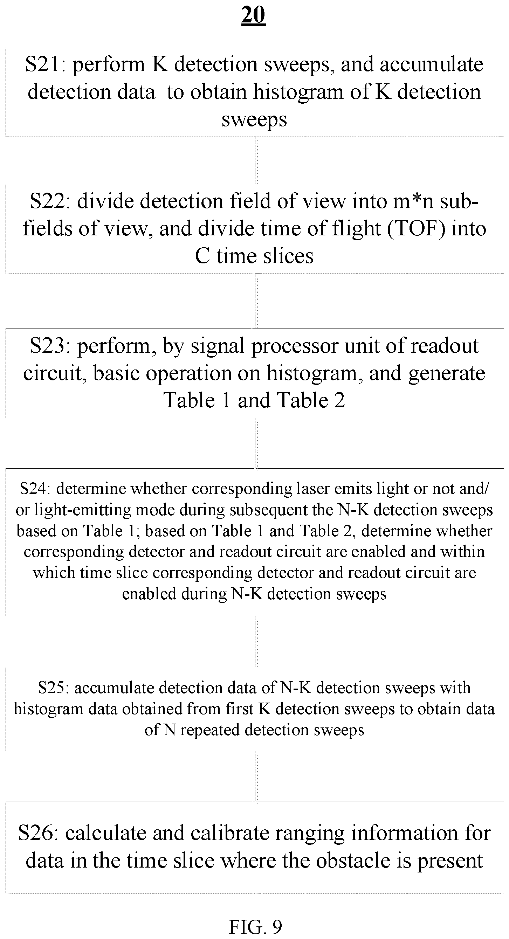

The detection method 10 is described in detail above through Embodiment one, and FIG. 9 shows a flowchart of a detection method 20 in an embodiment of this disclosure. The following description is given with reference to FIG. 9.

In step S21, K detection sweeps are performed, and detection data is accumulated to obtain a histogram of the K detection sweeps.

In a detection cycle, K detection sweeps are first performed to obtain detection data of the K detection sweeps, and then the detection data is accumulated to obtain a histogram of the K detection sweeps.

In step S22, the detection FOV of a LiDAR is divided into m*n sub-FOVs, and the time of flight ("TOF") is divided into C time slices Slice. The m*n sub-FOVs divided from the FOV to be detected of the LiDAR can be built into the LiDAR, and for example, by accurately setting the pointing of each detection channel of the LiDAR, such that each detection channel corresponds to one of the sub-FOVs.

In step S23, after K detection sweeps, the signal processor unit of the readout circuit performs a basic operation on the histogram and generates Table 1 and Table 2 based on the operation result and the division of the sub-FOVs and the time slices. The sub-FOVs where an obstacle exists can be identified based on the histogram of the K detection sweeps, and if the obstacle exists, the approximate distance (and the corresponding time slice) of the obstacle can be determined. Accordingly, the cells corresponding to the sub-FOVs in Table 1 and Table 2 can be filled, where the data in Table 1 characterizes whether an obstacle exists in the sub-FOVs, and the data in Table 2 characterizes the time slices corresponding to the obstacle if the obstacle exists. Optionally, the operation of dividing into the sub-FOVs and the time slices can be performed after the signal processor unit of the readout circuit performs the operation on the histogram and before Table 1 and Table 2 are generated.

In step S24, whether the corresponding laser emits light or not, and/or the light-emitting mode during the subsequent the $(K + 1)^{th}$ to $N^{th}$ detection sweeps are determined based on Table 1. Based on Table 1 and Table 2, whether the corresponding detector and the readout circuit are enabled or not and within which time slice the corresponding detector and the readout circuit are enabled during the subsequent $(K + 1)^{th}$ to $N^{th}$ detection sweeps are determined. The light-emitting scheme during the $(K + 1)^{th}$ to $N^{th}$ detection sweeps can be determined based on Table 1, for example, to determine whether the corresponding laser emits light or not, whether the laser emits light at a reduced power or whether the laser emits light at a low light-emitting density. If an obstacle exists in the sub-FOV, with reference to Table 2, the corresponding detector and readout circuit are controlled to be enabled only within a specific time slice to receive an echo and perform data processing.

In step S25, the detection data of the $(K + 1)^{th}$ to $N^{th}$ detection sweeps is accumulated with the histogram data obtained from the first K detection sweeps to obtain the data of N repeated detection sweeps. After the $(K + 1)^{th}$ to $N^{th}$ detection sweeps are completed, the detection data of the $(K + 1)^{th}$ to $N^{th}$ detection sweeps is combined with the detection data of the first K detection sweeps, for example, the detection data of the $(K + 1)^{th}$ to $N^{th}$ detection sweeps is accumulated with the histogram data obtained from the first K detection sweeps, to obtain a histogram of all N detection sweeps.

In step S26, ranging information is calculated and calibrated for the data in the time slice Slice where the obstacle exists. At least one of a distance or a reflectivity of the obstacle can be determined based on the detection data of the first K detection sweeps and the detection data of the $(K + 1)^{th}$ to $N^{th}$ detection sweeps, and at least one of the distance or the reflectivity of the obstacle can be calibrated based on the detection data of the $(K + 1)^{th}$ to $N^{th}$ detection sweeps.

In some embodiments of this disclosure, for example, still referring to FIG. 2, step S 122 in the detection method 10 further includes the following step: transmission power of the laser corresponding to the FOV where the obstacle exists is changed during the $(K + 1)^{th}$ to $N^{th}$ detection sweeps in the detection cycle based on at least one of intensity information or reflectivity information of the K detection sweeps. Specifically, in step S121, the sub-FOVs where the obstacle exists and the sub-FOVs where no obstacle exists are determined based on the detection data of the K detection sweeps. During the $(K + 1)^{th}$ to $N^{th}$ detection sweeps, power consumption can be reduced for the sub-FOVs where no obstacle exists, and then the total energy can be focused onto the sub-FOVs where the obstacle exists, for example, the transmission power of detection pulse for the lasers corresponding to the sub-FOVs where the obstacle exists is increased, to improve the signal-to-noise ratio.

In some embodiments of this disclosure, the detection method 10 further includes the following steps: when the intensity information is greater than a threshold, the transmission power of the laser corresponding to the FOV where the obstacle exists is reduced during the next detection sweep; and when the intensity is less than the threshold, the transmission power of the laser corresponding to the FOV where the obstacle exists is increased during the next detection sweep. Specifically, based on the time information and the intensity information corresponding to the time information included in the detection data of the first K detection sweeps, a histogram is obtained from the detection data of the first K detection sweeps, and the signal processor unit of the readout circuit performs an operation on the histogram to obtain the distance of the obstacle and the FOV where the obstacle is located. If the division is performed based on the sub-FOVs and the time slices, the sub-FOVs and the time slices where the obstacle is located can be obtained. For the FOV where the obstacle exists, whether the intensity information is higher than the threshold is determined. If the intensity information is higher than the threshold, the transmission power of the laser corresponding to the FOV is reduced during the next (e.g., $(K + 1)^{th}$) detection sweep; if the intensity information is lower than the threshold, the transmission power of the laser corresponding to the FOV is increased. The threshold can be set, for example, based on the signal-to-noise ratio, and when the signal-to-noise ratio is sufficient to identify an echo signal, excessive transmission power is not required, thereby reducing the total power consumption. When the intensity information is less than the threshold, the transmission power can be appropriately increased, thereby improving the signal-to-noise ratio and the ranging capability. It can be appreciated by those skilled in the art that it is not limited to change the transmission power of the $(K + 1)^{th}$ detection sweep through the detection data of the first K detection sweeps, the transmission power during the next detection sweep can be changed based on the intensity information of a certain one detection sweep, several detection sweeps or each detection sweep during the $(K + 1)^{th}$ to $N^{th}$ detection sweeps, and which change is performed or the number of changes is not limited in this disclosure.

In some embodiments of this disclosure, when the LiDAR includes multiple channels and each channel includes a laser and a corresponding detector for detection in a particular FOV range, the detection method 10 further includes the following steps: a region of interest ("ROI") (corresponding to the FOV where an obstacle exists) in a FOV of the LiDAR is acquired in a detection cycle; for a laser of a channel whose FOV range falls within the ROI, transmission power of the laser is increased in the next detection cycle, and preferably, the value of K is decreased. For example, in the next detection cycle (which can be the next detection of the current channel or can be the detection of the next channel with respect to the current channel), the N (e.g., N = 400) detection sweeps are re-divided, and the value of K is decreased (e.g., decrease K from K = 300 to K = 200) to reduce the number of rough measurements; in step S11, the transmission power of the laser during the first K detection sweeps is increased; in step S12, the number of fine measurements is increased (e.g., (N - K) is increased from 100 to 200 when N = 400 and K is decreased from 300 to 200) during the $(K + 1)^{th}$ to $N^{th}$ detection sweeps. Although the transmission power is increased in step S11, the number of detection sweeps performed is reduced, the light-emitting scheme for the subsequent detection sweeps is changed based on the first K detection sweeps, and the number of subsequent detection sweeps to be performed is increased, thereby further enhancing the effect of reducing the total power consumption.

In some embodiments of this disclosure, when the LiDAR includes multiple channels and each channel includes a laser and a corresponding detector for detection in a specific FOV range, the detection method 10 further includes the following steps: an ROI in a FOV of the LiDAR is acquired in a detection cycle, and for a laser of a channel whose FOV range falls within the ROI, the value of N is increased in the next detection cycle. Specifically, in the next detection cycle, the total number of repeated detection sweeps of the ROI region is increased (e.g., increase N from N = 400 to N = 500). Since the duration was originally reserved for all the lasers to perform N detection sweeps respectively and now only those lasers in the ROI region are now required to perform detection sweeps, the number of lasers is relatively reduced so that a longer duration can be reserved for each laser to perform repeated detection sweeps. The increase in the value of N can improve the signal-to-noise ratio, thereby improving the ranging accuracy. To ensure a fixed frame rate, the number of repeated detection sweeps increased for each laser depends on how many lasers outside the ROI do not need to additionally emit light.

If the algorithm of the LiDAR provides data for dynamically tracking the obstacle (e.g., the obstacle is moving, the obstacle can be at the position d1 in the current detection cycle and can be at the position d2 in the next detection cycle), K rough measurements must be performed in each detection cycle to determine the position of the moving obstacle. In some embodiments of this disclosure, with the method for providing data for dynamic tracking, in consideration of the obstacle movement margin, after the actual ROI is acquired, the region is expanded in every direction to ensure that the moving obstacle can be captured in the next detection cycle when the obstacle moves outside the actual ROI, thereby effectively changing the light-emitting scheme.

The change of the scheme at the transmitting end is described above. To reduce the power consumption and reduce the amount of data computation, the data storage and processing method at the receiving end can also be changed.

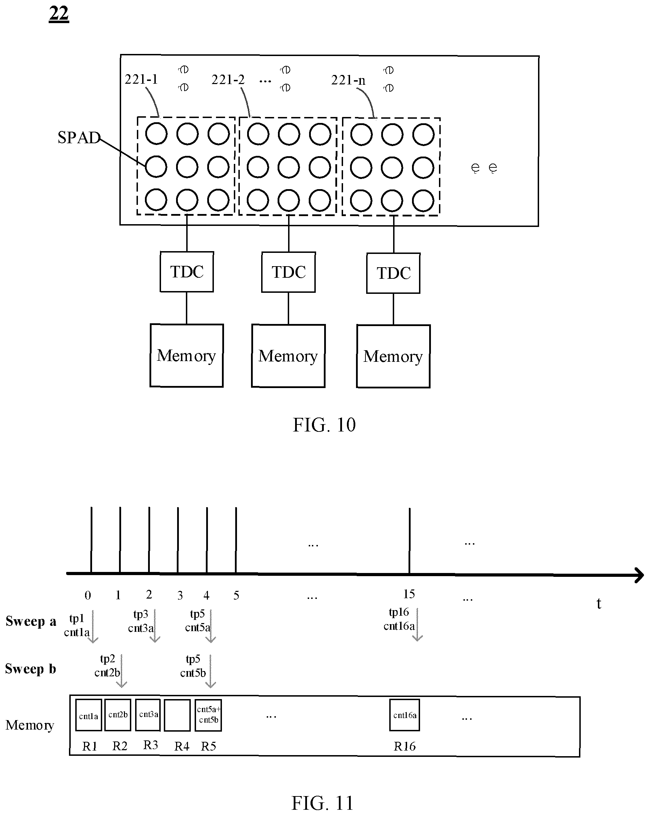

FIG. 10 shows an embodiment of a detector module. The detector module 22 includes multiple detector units, which are shown as detector units 221-1, 221-2, ..., and 221-n, for example, referring to FIG. 4. Each detector unit includes multiple SPADs (e.g., 9 SPADs, referring to FIG. 10, which can also be 3, 4, or p SPADs, where p is a positive integer greater than or equal to 1). The output terminals of the SPADs of each detector unit are connected to a time-to-digital converter ("TDC"). The range of the detection window of each detector unit (i.e., the time period in which the SPAD is capable of sensing the incident photon) is independently adjustable, that is, each detector unit can be independently controlled to be in an activated state (i.e., the SPAD is in a Geiger mode, which means that a reverse bias voltage greater than a breakdown voltage is applied to the SPAD such that an avalanche effect can be triggered when the SPAD receives the photon) or a deactivated state (a state in which no avalanche can be triggered by the photon). After the photon is incident on the detector units 221-1, 221-2, ..., and 221-n, the SPADs are triggered, and electrical signals are generated.

Each detector unit is coupled to a TDC, and the TDC can determine the arrival time of the photon. The data processor device (not shown in FIG. 11) connected to the TDC can acquire the transmission time of detection light, determine the time difference between the arrival time of the photon and the transmission time of detection light, and store the result in a memory.

Taking the detector module 22 shown in FIG. 10 as an example, the output terminals of multiple SPADs are connected to the same TDC, serving as a detector unit 221, the time information is the time at which one or more SPADs in the detector unit 221 are triggered, and the intensity information is the number of SPADs that are triggered at the trigger time, that is, the intensity of the optical signal is characterized by the number of the triggered SPADs.

Taking the detector shown in FIG. 10 as an example, the time information is the time at which one or more SPADs in the detector (221-1, 221-2, 221-3, or the like) are triggered, and the intensity information is the number of SPADs that are triggered at the trigger time, that is, the intensity of the optical signal is characterized by the number of the triggered SPADs. In some embodiments of this disclosure, the time information is a timestamp at which the SPAD is triggered, that is, the time difference $t_{1a} - t_a$ between the time $t_a$ at which the laser emits light and the time $t_{1a}$ at which the SPAD is triggered.

In the embodiment of FIG. 10, the time information and the intensity information are described by using the SPAD as an example. It is readily appreciated by those skilled in the art that this disclosure is not limited thereto, and other types of photodetectors can be used, including, but not limited to, avalanche photodiodes ("APD"), silicon photomultipliers ("SiPM"), and the like. For different photodetectors, the intensity information can be characterized by using different parameters. For example, when the photodetector is a SPAD array, the number of SPADs triggered simultaneously corresponding to the time information can be taken as the intensity information; if the photodetector is a SiPM, the intensity information of the optical signal can be characterized by the amplitude of the output level/current corresponding to the time information.

Through the detector module 22 shown in FIG. 10, for one detection sweep, the controller of the LiDAR gates part (one row, one column or any shape of interest) of detector units 221 by supplying a high voltage to the SPADs and then sends a synchronization signal to inform the lasers at the transmitting end that they can emit light; the lasers at the transmitting end emit a light pulse for detection at the time point $t_a$ ($a$ represents the $a^{th}$ detection sweep); the light pulse encounters an external obstacle, is reflected by the obstacle, returns to the LiDAR, and can be received by the photodetector at the receiving end.

When the photodetector is a SPAD array, once the photon is received by the SPAD, an avalanche signal is generated and transmitted to the TDC, and the TDC outputs a time signal $t_{1a}$ of the triggering of the SPAD and a count signal cnti, of the SPADs triggered at the same time point (here $1a$ represents the first triggering of the $a^{th}$ detection sweep). The trigger time point timestamp$_{1a}$ (hereinafter referred to as tp$_{1a}$) of ti, - $t_a$ is calculated by the subtraction program, and the tp$_{1a}$ and the count signal cnt$_{1a}$ of SPADs triggered at the trigger time point are transmitted to and stored in the memory. One detector unit 221 includes multiple SPADs, and the SPAD can perform detection again after the dead time. Therefore, during one detection sweep, the SPAD can be triggered again at another time point, and the memory stores tp$_{2a}$ and cnt$_{2a}$ of this triggering ($2a$ represents the second triggering of the $a^{th}$ detection sweep). Multiple triggering in one detection sweep need to be stored based on time information.

During the next detection sweep $b$, the controller of the LiDAR transmits a signal again based on a predetermined program to control the transmitting end to transmit a detection light pulse at the time point $t_b$. Once the photon is received by the SPAD, an avalanche electrical signal is transmitted to the TDC, and the TDC outputs a time signal $t_{1b}$ of the triggering of the SPAD and a count signal cnt$_{1b}$ of the SPADs triggered at the same time point (here $1b$ represents the first triggering of the $b^{th}$ detection sweep). Subsequently, the trigger time point timestamp$_{1b}$ (hereinafter referred to as tp$_{1b}$) of the SPAD trigger time $t_{1b} - t_b$ and the count signal cnt$_{1b}$ at the trigger time point are stored in the memory. One detector unit 221 includes multiple SPADs, and the SPAD can perform detection again after the dead time. Therefore, during one detection sweep, the SPAD can be triggered again at another time point, and the memory stores tp$_{2b}$ and cnt$_{2b}$ of this triggering.

During the hundreds of detection sweeps, the triggering count cnt obtained from each detection sweep is stored at the corresponding position in the memory based on the trigger time point timestamp. When a new triggering count cnt arrives at the corresponding position of the same trigger time point timestamp, the originally stored value is accumulated with the new triggering count cnt and then the result is updated and stored to the position. After the n detection sweeps accumulate, a histogram is stored in the memory, and still referring to FIG. 2, the histogram reflects the sum of the triggering counts cnt corresponding to different trigger time point timestamp on the time axis. In this way, the time information corresponding to the echo is obtained through the operations of calculating the center of gravity or the leading-edge time using the histogram and taken as the time of flight for distance calculation, and one point in the point cloud can be generated.

In the time-to-digital converter of some LiDARs, each time scale of the time resolution of the time-to-digital converter requires one corresponding storage position, and the count information cnt of all triggered SPADs obtained from multiple measurements is stored in the storage position corresponding to the time point. Since the time resolution of the time-to-digital converter TDC can be of the order of picoseconds (ps), a register with a great deal of storage space is required. The explanation is as follows.

A data storage method is shown in FIG. 11, where the abscissa is the time t, the scale interval of the abscissa is the resolution of the TDC, and each time scale corresponds to one storage position R (register). For example, during a certain detection sweep $a$, a SPAD triggering occurs at the time scale 0, a timestamp $tp_1$ (trigger time - transmission time of current detection sweep) and triggering count information $cnt_{1a}$ are calculated based on the transmission time and the trigger time transmitted by the TDC, and the triggering count information $cnt_{1a}$ is stored in the storage position R1 corresponding to the time point $tp_1$. If a SPAD triggering occurs at the time scale 4, the time information $tp_5$ and $cnt_{5a}$ are obtained, and $cnt_{5a}$ is stored in the storage position R5 corresponding to $tp_5$. During another detection sweep $b$, a SPAD triggering also occurs at the time scale 4, the time information $tp_5$ and $cnt_{5b}$ are obtained, and $cnt_{5b}$ also corresponds to the storage position R5. At this time, $cnt_{5a}$ is read out, and the sum of $cnt_{5b}$ and $cnt_{5a}$ is updated to R5 (in conjunction with FIG. 10, $a$ represents the $a$th detection sweep, $b$ represents the $b$th detection sweep, and the number represents a corresponding time scale and a corresponding storage position; the storage position R is in one-to-one correspondence with the time scale, the memory stores only the triggering count cnt, and the data processor circuit can obtain the time corresponding to the triggering count cnt based on the storage position when reading data).

For example, still referring to FIG. 11, it can be seen that one histogram is obtained by accumulating the data of multiple detection sweeps (400 to 500 detection sweeps), and in the process of obtaining a histogram from the accumulation of results of hundreds of detection sweeps and obtaining a point in the point cloud, the storage position corresponding to a certain time scale stores the accumulated sum of the counts cnt of all triggerings occurring at the time point. Although the SPAD triggering does not occur at each time scale during a single sweep, for example, referring to FIG. 11, the histogram data is generated from the accumulation of results of multiple detection sweeps, and at each time scale, there can be a SPAD triggering occurring during a certain sweep so that the memory receives corresponding data. Therefore, for a TDC, each time scale requires one corresponding storage position, and all the triggering counts cnt obtained from multiple measurements is stored in the storage position corresponding to the time point. Since the time interval of tp, that is, the resolution of the TDC, can be in the order of ps, a register with a great deal of storage space is required.

With such storage and ranging methods, since the precision unit of the timestamp is in the order of ps, when a long TOF detection is performed, the storage of a complete histogram requires a large memory and consumes a great deal of storage space. In particular, to improve the long distance ranging capability, the time length of the measurement and the number of repeated measurements need to be increased, and the requirement for the storage space is also increased.

The inventors of this disclosure have conceived that there is no need to set a corresponding storage position for each time scale of the time resolution of the TDC, and when the detection data is stored, the intensity information is not stored based on the time resolution, but is stored based on the weight of the time information with a lower time precision. In this disclosure, the data storage method with weighted accumulation is used to compress the original signal while preserving the ranging precision, thereby greatly reducing the storage space required for storing the histogram. For example, the data storage method with weighted accumulation can reduce the total storage space to 1/10 of the original storage space.

For example, the time precision for storing the intensity information in this disclosure is a first time precision, and the first time precision can be n times the time resolution of the TDC. The intensity information refers to the intensity information of the optical signal corresponding to the time information. For different photodetectors, the intensity of the optical signal can be characterized by different parameters. For example, when the photodetector is a SPAD array, the number of SPADs triggered simultaneously corresponding to the time information can be taken as the intensity information; if the photodetector is a SiPM, the intensity information of the optical signal can be characterized by the amplitude of the output level/current corresponding to the time information.

A detailed description is given below with reference to the drawings.

First, the detection data of the LiDAR includes time information and intensity information corresponding to the time information.

The data storage method in this disclosure is as follows: the intensity information is stored based on a weight of the time information at a first time precision, where the first time precision is a time interval between any two adjacent first time scales and n times the time resolution of the detection data of the LiDAR, n>1, and the weight is associated with a time interval between the time information and at least one first time scale.

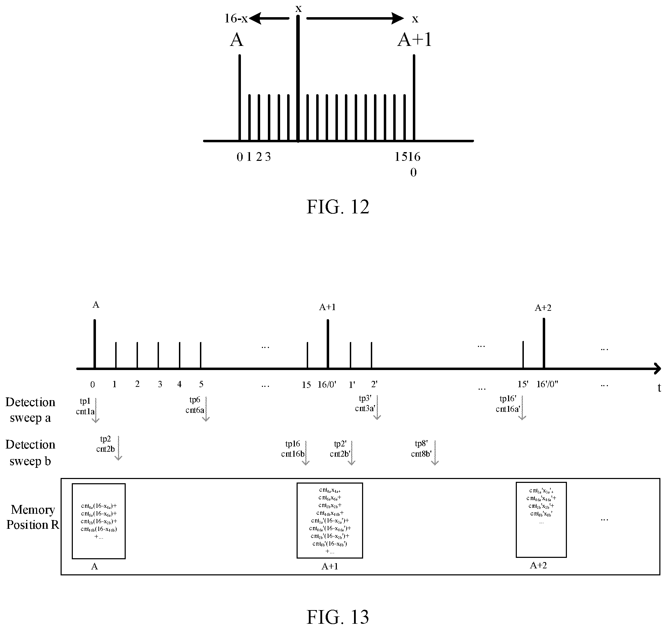

FIGS. 12 and 13 show schematic diagrams of a storage manner, consistent with some embodiments of this disclosure. The implementation of the data storage method of this disclosure is described in detail below with reference to FIGS. 12 and 13.

In FIG. 12, the abscissa is the time of flight, and the interval of the time scale of the abscissa is, for example, the time resolution of the LiDAR, for example, the time resolution of the TDC, which can be in the order of ps. Still referring to FIG. 12, a first time scale is set on the basis of the time resolution of the LiDAR. As shown by A and A+1 in FIG. 12, the interval between two adjacent first time scales crosses 16 intervals of the time resolution of the LiDAR. When the photon is detected at the time point x (e.g., one or more SPADs in one detector shown in FIG. 10 are triggered), the detected intensity value is stored based on the weight of the time point x. The time point x means that the time interval between the time point and the adjacent first time scale A to the left of the time point is x times the time resolution of the detection data of the LiDAR.

It is readily appreciated by those skilled in the art that since the time resolution of the LiDAR is small and the interval of the first time scale is large, the time scale corresponding to the time resolution of the LiDAR can also be referred to as a "fine scale", and the first time scale can also be referred to as a "rough scale".

For example, still referring to FIG. 12, the weight of the time point x includes a first weight and a second weight, the first weight is associated with a time interval between the time point x and one of adjacent first time scales, and the second weight is associated with a time interval between the time point x and the other one of adjacent first time scales. After the first weight and the second weight are determined, the intensity information is stored based on the first weight and the second weight, respectively, at the first time precision.

In some embodiments of this disclosure, the first weight is associated with a time interval between the time point x and the adjacent first time scale A to the left of the time point x, and the first weight, for example, is (16 - x); the second weight is associated with a time interval between the time point x and the adjacent first time scale A+1 to the right of the time point x, and the second weight, for example, is x. Therefore, the time point x is represented as its weights at two adjacent rough scales (A and A+1) instead, where the weight of x on the rough scale A is (16 - x), and the weight on the rough scale A+1 is x (x characterizes the distance from the time point to A), as an equivalent to the fine scale of the time point x. In other words, by taking x as a weight, the data at the fine scale is stored on the addresses corresponding to the two adjacent rough scales to represent the value of the scale x, instead of storing the scale x itself. This process is represented by the following equation:

$$A * (16 - x) + (A + 1) * x = A * 16 + x$$

In the equation, the left on the equal sign is the sum of the starting value and the ending value of the rough scale stored using the rough scale, weights are applied to the starting value and the ending value, and the right of the equal sign is the specific value of the timestamp. As can be seen, the specific value of the timestamp can be accurately characterized by using the storage method of rough scale in combination with weight.

Similarly, when the signal obtained from the triggering further includes, in addition to the timestamp, the triggering count cnt indicating the triggering count or the intensity, the newly-added intensity information at the rough scale A is cnt*(16 - x), and the newly-added intensity information at the rough scale A+1 is cnt*x, which are accumulated during multiple sweeps, respectively. A detailed description is given below, for example, referring to FIG. 13. The fine scale represents the time resolution of the TDC. For a certain timestamp, the starting value of its rough scale is A, and its fine scale is at the scale x on the corresponding 0-15 fine scale plate in its rough scale.

For example, still referring to FIG. 13, one register is assigned to each rough scale, the interval between the rough scales of the abscissa is 16 times the resolution of the TDC, and each rough scale corresponds to one register. During a certain sweep $a$, a SPAD triggering occurs at the time scale 0, the time information $tp_1$ (corresponding to $x_{1a}$ = 0) and the triggering count information $cnt_{1a}$ are obtained, $cnt_{1a}*(16 - x_{1a})$ is stored in the register A corresponding to the rough scale A, and $cnt_{1a}*x_{1a}$ is stored in the register A+1 corresponding to the rough scale A+1; at another time scale 5, the time information $tp_6$ (corresponding $x_{6a}$ = 5) and the triggering count information $cnt_{6a}$ are obtained, and the data stored in the register A corresponding to the rough scale A is read out, added with $cnt_{6a}* (16 - x_{6a})$ and the sum is then stored in the register A; the data in the register A+1 corresponding to the rough scale A+1 is read out, added with $cnt_{6a}*x_{6a}$ and the sum is then re-stored in the register A+1. Within one rough scale time period (fine scale 0~16), all the triggering count information cnt is applied with a weight, added with the original data and the sum is stored in the registers corresponding to the storage position A and A+1. The triggering count information cnt within the next rough scale time period is applied with a weight and then stored in the registers corresponding to the rough scales A+1 and A+2. For example, when the SPAD triggering occurs at the time point 2', the time information $tp_3$' and $cnt_{3a}$' are obtained, the data stored in the register A+1 corresponding to the rough scale A+1 is added with $cnt_{3a}$'*(16 - $x_{3a}$'), and $cnt_{3a}$' * $x_{3a}$' is stored in the register A+2 corresponding to the rough scale A+2.

During the next sweep b, the received signals $tp_2$ and $cnt_{2b}$ are applied with weights $cnt_{2b}* (16 - x_{2b})$ and $cnt_{2b}*x_{2b}$ at the rough scales A and A+1, respectively, added with the originally stored data respectively and then the sums are respectively stored in the registers corresponding to the rough scales A and A+1. The histogram is obtained by accumulating the data of multiple sweeps, and during the multiple sweeps, the triggering counts cnt of all the triggerings occurring at the time points 0~15 are stored in the registers corresponding to the rough scales A and A+1.

With respect to the scheme in which one register is required for data storage at each fine scale, in this disclosure, a data storage method with weighted accumulation is used, and the registers only need to be set corresponding to the rough scale of 0~n+1, and the number of registers required is reduced to 1/16 of the original number. Although the bit width of each register for storage is increased and the occupied space is increased, the total storage space can be reduced to 1/10 of the original storage space through the data storage method with weighted accumulation because the storage positions to be assigned are greatly reduced.

In the embodiments of FIGS. 12 and 13, the time interval of adjacent first time scales (rough scales) is 16 times the time resolution (fine scale) of the detection data of the LiDAR, that is, data is compressed using 16 as a weight. It is readily appreciated by those skilled in the art that this disclosure is not limited thereto, and the weight here can be any positive integer. Preferably, the time interval of the rough scale is $2^m$ times that of the fine scale, where m is a positive integer, thereby facilitating implementation in a field-programmable gate array ("FPGA") or an application-specific integrated circuit ("ASIC").

In the above-mentioned embodiments, the first weight is (16 - x), the second weight is x, and this disclosure is not limited thereto. The first weight can be x, the second weight is (16 - x); or the first weight can be 1- (x/n), and the second weight is x/n, as long as the first weight is associated with a time interval between the time point x and one of adjacent first time scales, and the second weight is associated with a time interval between the time point x and the other one of adjacent first time scales.

The above-mentioned storage method in this disclosure can be applied to the methods 10 and 20 of the first aspect of this disclosure. For example, the detection data of the first K detection sweeps can be stored in the rough storage manner, and the detection data of the (K + 1)th to Nth detection sweeps can be stored in the fine storage manner.

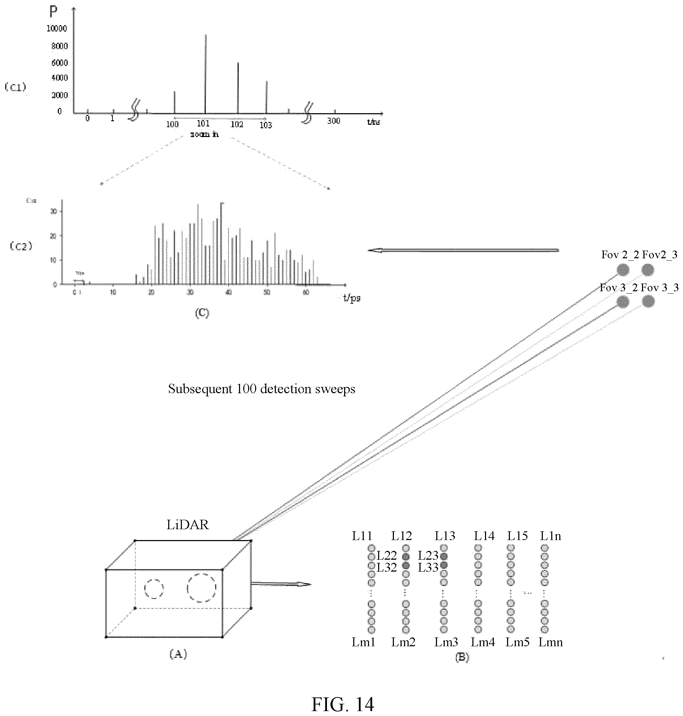

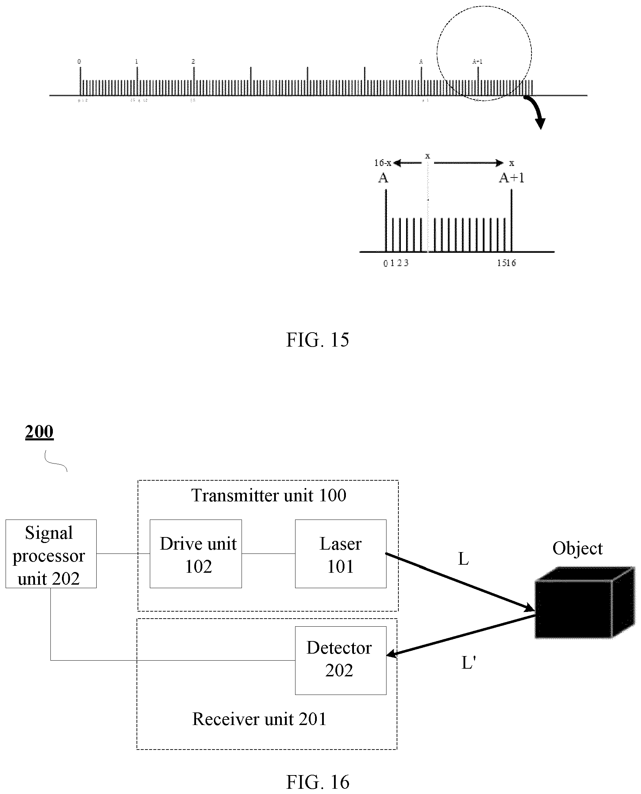

Still referring to Embodiment one, the detection data of the first K (e.g., K = 300) detection sweeps is stored in the rough storage manner, for example, still referring to FIG. 6C, to obtain histogram data C1; then, histogram data of the (N - K) (e.g., N - K = 100) detection sweeps is stored in the fine storage manner, for example, referring to FIG. 14 (C), to obtain histogram data C2; finally, for the detection data in the time slices (Slice 100 to Slice 103) where an obstacle exists, the calculation of distance information is performed using the histogram data C1 to obtain a preliminary detection distance d' and reflectivity R', and the preliminary detection distance d' is calibrated using the histogram data C2 to obtain the final detection distance d and reflectivity R. The comparison relationship between the scale for rough storage used in the histogram data C1 and the scale for fine storage used in the histogram data C2 is shown in FIG. 15, where 0, 1, 2, ..., A, and A + 1 are rough scales, and included between every two rough scales (e.g., between A and A + 1) are multiple fine scales, that is, the time resolution of the LiDAR, for example, the fine scale x.

The change of the receiving scheme at the receiving end is specifically illustrated above through different storage manners. In some embodiments of this disclosure, for example, still referring to FIG. 1B, the detection method 10 further includes step S13-B.

In step S13-B, a detection window of a detector is changed based on a FOV of the obstacle during the (K + 1)th to Nth detection sweeps to obtain detection data of the detector within the detection window.

This disclosure further relates to a transmitter unit 100 for a LiDAR. For example, referring to FIG. 16, the transmitter unit 100 includes a laser 101 and a drive unit 102.

The laser 101 can transmit a pulse.

The drive unit 102 is coupled to the laser 101 and can drive the laser 101 to transmit a pulse to measure at least one of a distance or a reflectivity of an obstacle. The drive unit 102 can also perform the following operations:

   S11: obtaining detection data of K detection sweeps in a detection cycle, where the detection data includes time information and intensity information corresponding to the time information, the detection cycle includes N detection sweeps, N is an integer greater than 1, K is an integer, and $1 \leq K < N$; and
   S12: changing a light-emitting scheme of the laser 101 during the (K + 1)th to Nth detection sweeps in the detection cycle based on the detection data of the K detection sweeps.

In some embodiments of this disclosure, operation S12 further includes:

   S121: identifying a FOV where an obstacle exists based on the detection data of the K detection sweeps; and
   S122: for a FOV where no obstacle exists, controlling the laser 101 corresponding to the FOV during the (K + 1)th to Nth detection sweeps in the detection cycle using one or more of the following:

      not transmitting a detection pulse;
      controlling the laser 101 to transmit a detection pulse at reduced power; and

when multiple lasers 101 correspond to the current detection, controlling part of the lasers 101 to transmit a detection pulse.

This disclosure further provides a LiDAR 200. For example, referring to FIG. 12, the LiDAR 200 includes a transmitter unit 100, a receiver unit 201, and a signal processor unit 202.

The transmitter unit 100 includes a laser 101 and a drive unit 102.

The laser 101 can transmit a pulse.

The drive unit 102 is coupled to the laser and can drive the laser to transmit a pulse to measure at least one of a distance or a reflectivity of an obstacle, where the detection cycle includes N detection sweeps, and N is an integer greater than 1.

The receiver unit 201 can receive an echo of the pulse reflected from the obstacle and convert the echo into an electrical signal.

The signal processor unit 202 is coupled to the transmitter unit 100 and the receiver unit 201 and can generate detection data of each detection sweep based on the electrical signal, where the detection data includes time information and intensity information corresponding to the time information.

The drive unit 102 can perform the following operations:

S11: obtaining detection data of K detection sweeps in a detection cycle, where K is an integer, and $1 \leq K < N$; and

S12: changing a light-emitting scheme of the laser 101 during the $(K + 1)^{th}$ to $N^{th}$ detection sweeps in the detection cycle based on the detection data of the K detection sweeps.

In some embodiments of this disclosure, operation S12 further includes:

Operation S121: identifying a FOV where an obstacle exists based on the detection data of the K detection sweeps; and

Operation S122: for a FOV where no obstacle exists, controlling the laser 101 corresponding to the FOV during the $(K + 1)^{th}$ to $N^{th}$ detection sweeps in the detection cycle using one or more of the following:

not transmitting a detection pulse;

controlling the laser 101 to transmit a detection pulse at reduced power; and

when multiple lasers 101 correspond to the current detection, controlling part of the lasers 101 to transmit a detection pulse.

In some embodiments of this disclosure, the signal processor unit 202 is configured to: determine at least one of a distance or a reflectivity of the obstacle based on the detection data of the K detection sweeps and detection data of the $(K + 1)^{th}$ to $N^{th}$ detection sweeps, and calibrate at least one of the distance or the reflectivity of the obstacle based on the detection data of the $(K + 1)^{th}$ to $N^{th}$ detection sweeps.

In some embodiments of this disclosure, the drive unit 102 is further configured to: change transmission power of the laser 102 corresponding to the FOV where the obstacle exists during the $(K + 1)^{th}$ to $N^{th}$ detection sweeps in the detection cycle based on at least one of intensity information or reflectivity information of the K detection sweeps.

In some embodiments of this disclosure, the drive unit 102 is further configured to: when an intensity is greater than a threshold, reduce the transmission power of the laser 101 corresponding to the FOV where the obstacle exists during the next detection sweep; and when the intensity is less than the threshold, increase the transmission power of the laser 101 corresponding to the FOV where the obstacle exists during the next detection sweep.

In some embodiments of this disclosure, the LiDAR 200 includes multiple channels, and each channel includes a laser 101 and a corresponding detector 202 to perform TOF measurement for a particular FOV range. The drive unit 102 is further configured to:

acquire an ROI in a FOV of the LiDAR 200; and

for a laser of a channel whose FOV range falls within the ROI, increase transmission power of the laser 101 in operation S11.

In some embodiments of this disclosure, the drive unit 102 can increase the transmission power of the laser 101 and decrease the value of K in operation S11.

In some embodiments of this disclosure, the LiDAR 200 includes multiple channels, and each channel includes a laser 101 and a corresponding detector 202 for detection in a particular FOV range. The drive unit 102 is further configured to:

acquire an ROI in a FOV of the LiDAR 200; and
for a laser 101 of a channel whose FOV range falls within the ROI, increase the value of N.

In some embodiments of this disclosure, the detection data is stored in a first storage manner or a second storage manner, where the first storage manner includes: storing the intensity information based on a weight of the time information at a first time precision, where the first time precision is a time interval between any two adjacent first time scales and M times a time resolution of detection data of the LiDAR 200, M > 1, and the weight is associated with a time interval between the time information and at least one first time scale; and the second storage manner includes: storing the intensity information based on the time resolution of the LiDAR 200.

In some embodiments of this disclosure, a first set of detection data is stored in the first storage manner, and a second set of detection data is stored in the second storage manner.

In some embodiments of this disclosure, the weight includes a first weight and a second weight, the first weight is associated with a time interval between the time information and one of adjacent first time scales, the second weight is associated with a time interval between the time information and the other one of adjacent first time scales, and the first storage manner includes: storing the intensity information based on the first weight and the second weight, respectively, at the first time precision.

In some embodiments of this disclosure, the drive unit 102 is further configured to perform the following operation: Operation S13: changing a detection window of the detector 202 based on a FOV of the obstacle during the $(K + 1)^{th}$ to $N^{th}$ detection sweeps to obtain detection data of the detector 202 within the detection window.

In some embodiments of this disclosure, operation S13 further includes at least one of the following:

activating the detector 202 only within the detection window; or
maintaining the detector 202 activated, and reading only the detection data of the detector 202 within the detection window.

Finally, it is to be noted that the above are merely preferred embodiments of this disclosure and are not intended to limit this disclosure. Although the embodiments of this disclosure are described in detail with reference to the above-mentioned embodiments, those skilled in the art can still modify the technical schemes described in the above-mentioned embodiments, or make equivalent substitutions on part of the technical features therein. Any modifications, equivalent substitutions, improvements and the like within the spirit and principle of this disclosure shall fall within the scope of protection of this disclosure.

**Claims**

1. A detection method for a LiDAR, comprising:

   S11: obtaining detection data of K detection sweeps in a detection cycle, wherein the detection cycle comprises N detection sweeps, N is an integer greater than 1, K is an integer, and $1 \leq K < N$; and
   S12: changing a light-emitting scheme of a laser during the $(K + 1)^{th}$ to $N^{th}$ detection sweeps in the detection cycle based on the detection data of the K detection sweeps.

2. The detection method of claim 1, wherein the step S12 comprises:

   S121: identifying a FOV where an obstacle exists based on the detection data of the K detection sweeps; and
   S122: for a FOV where no obstacle exists, controlling the laser corresponding to the FOV during the $(K + 1)^{th}$ to $N^{th}$ detection sweeps in the detection cycle using one or more of the following:

      not transmitting a detection pulse;
      controlling the laser to transmit a detection pulse at reduced power; and
      controlling part of the lasers to transmit a detection pulse.

3. The detection method of claim 2, further comprising: determining at least one of a distance or a reflectivity of the obstacle based on the detection data of the K detection sweeps and detection data of the $(K + 1)^{th}$ to $N^{th}$ detection sweeps, and calibrating at least one of the distance or the reflectivity of the obstacle based on the detection data of the $(K + 1)^{th}$ to $N^{th}$ detection sweeps.

4. The detection method of claim 3, wherein the step S122 further comprises: changing transmission power of the laser corresponding to the FOV where the obstacle exists during the $(K + 1)^{th}$ to $N^{th}$ detection sweeps in the detection cycle based on at least one of intensity information or reflectivity information of the K detection sweeps.

5. The detection method of claim 4, further comprising: when the intensity information is greater than a threshold, reducing the transmission power of the laser corresponding to the FOV where the obstacle exists during a next detection sweep; and
when the intensity is less than the threshold, increasing the transmission power of the laser corresponding to the FOV where the obstacle exists during the next detection sweep.

6. The detection method of any one of claims 1 to 5, wherein the LiDAR comprises multiple channels, each of the channels comprises a laser and a corresponding detector for detection in a particular FOV range, and the detection method further comprises:

   acquiring a region of interest in a FOV of the LiDAR; and
   for a laser of a channel whose FOV range falls within the region of interest, increasing transmission power of the laser in step S11.

7. The detection method of claim 6, further comprising: increasing the transmission power of the laser, and decreasing a value of K.

8. The detection method of any one of claims 1 to 5, wherein the LiDAR comprises multiple channels, each of the channels comprises a laser and a corresponding detector for detection in a particular FOV range, and the detection method further comprises:

   acquiring a region of interest in a FOV of the LiDAR; and
   for a laser of a channel whose FOV range falls within the region of interest, increasing a value of N.

9. The detection method of any one of claims 1 to 5, wherein the detection data is stored in a first storage manner or a second storage manner, wherein the first storage manner comprises: storing the intensity information based on a weight of the time information at a first time precision, wherein the first time precision is a time interval between any two adjacent first time scales and M times a time resolution of detection data of the LiDAR, M>1, and the weight is associated with a time interval between the time information and at least one first time scale; and the second storage manner comprises: storing the intensity information based on the time resolution of the LiDAR.

10. The detection method of claim 9, wherein a first set of detection data is stored in the first storage manner, and a second set of detection data is stored in the second storage manner.

11. The detection method of claim 9, wherein the weight comprises a first weight and a second weight, the first weight is associated with a time interval between the time information and one of adjacent first time scales, the second weight is associated with a time interval between the time information and the other one of adjacent first time scales, and the first storage manner comprises: storing the intensity information based on the first weight and the second weight, respectively, at the first time precision.

12. The detection method of any one of claims 1 to 5, further comprising:
S13: changing a detection window of a detector based on a FOV of the obstacle during the $(K + 1)^{th}$ to $N^{th}$ detection sweeps to obtain detection data of the detector within the detection window.

13. The detection method of claim 12, wherein the step S13 further comprises at least one of:

   activating the detector only within the detection window; or
   maintaining the detector activated, and reading only the detection data of the detector within the detection window.

14. A transmitter unit for a LiDAR, comprising:

   a laser, configured to transmit a pulse; and
   a drive unit, coupled to the laser and configured to be capable of driving the laser to transmit the pulse to measure at least one of a distance or a reflectivity of an obstacle, wherein the drive unit is further configured to perform the following operations:

S11: obtaining detection data of K detection sweeps in a detection cycle, wherein the detection data comprises time information and intensity information corresponding to the time information, the detection cycle comprises N detection sweeps, N is an integer greater than 1, K is an integer, and $1 \leq K < N$; and
S12: changing a light-emitting scheme of the laser during the $(K + 1)^{th}$ to $N^{th}$ detection sweeps in the detection cycle based on the detection data of the K detection sweeps.

15. The transmitter unit of claim 14, wherein the operation S12 further comprises:

S121: identifying a FOV where an obstacle exists based on the detection data of the K detection sweeps; and
S122: for a FOV where no obstacle exists, controlling the laser corresponding to the FOV during the $(K + 1)^{th}$ to $N^{th}$ detection sweeps in the detection cycle using one or more of the following:

not transmitting a detection pulse;
controlling the laser to transmit a detection pulse at reduced power; and
when multiple lasers correspond to a current detection, controlling part of the lasers to transmit a detection pulse.

16. A LiDAR, comprising:

a transmitter unit, comprising:

a laser, configured to transmit a pulse;
a drive unit, coupled to the laser and configured to be capable of driving the laser to transmit the pulse to measure at least one of a distance or a reflectivity of an obstacle, wherein the detection cycle comprises N detection sweeps, and N is an integer greater than 1;

a receiver unit, configured to receive an echo of the pulse reflected by the obstacle and convert the echo into an electrical signal; and
a signal processor unit, coupled to the transmitter unit and the receiver unit and configured to generate detection data of each detection sweep based on the electrical signal, wherein the detection data comprises time information and intensity information corresponding to the time information;
wherein the drive unit is configured to perform the following operations:

S11: obtaining detection data of K detection sweeps in a detection cycle, wherein K is an integer, and $1 \leq K < N$; and
S12: changing a light-emitting scheme of the laser during the $(K + 1)^{th}$ to $N^{th}$ detection sweeps in the detection cycle based on the detection data of the K detection sweeps.

17. The LiDAR of claim 16, wherein the operation S12 further comprises:

S121: identifying a FOV where an obstacle exists based on the detection data of the K detection sweeps; and
S122: for a FOV where no obstacle exists, controlling the laser corresponding to the FOV during the $(K + 1)^{th}$ to $N^{th}$ detection sweeps in the detection cycle using one or more of the following:

not transmitting a detection pulse;
controlling the laser to transmit a detection pulse at reduced power; and
when multiple lasers correspond to a current detection, controlling part of the lasers to transmit a detection pulse.

18. The LiDAR of claim 17, wherein the signal processor unit is configured to: determine at least one of a distance or a reflectivity of the obstacle based on the detection data of the K detection sweeps and detection data of the $(K + 1)^{th}$ to $N^{th}$ detection sweeps, and calibrate the at least one of distance or the reflectivity of the obstacle based on the detection data of the $(K + 1)^{th}$ to $N^{th}$ detection sweeps.

19. The LiDAR of claim 18, wherein the drive unit is further configured to: change transmission power of the laser corresponding to the FOV where the obstacle exists during the $(K + 1)^{th}$ to $N^{th}$ detection sweeps in the detection cycle based on at least one of intensity information or reflectivity information of the K detection sweeps.

20. The LiDAR of claim 19, wherein the drive unit is further configured to: when an intensity is greater than a threshold, reduce the transmission power of the laser corresponding to the FOV where the obstacle exists during a next detection sweep; and when the intensity is less than the threshold, increase the transmission power of the laser corresponding to the FOV where the obstacle exists during the next detection sweep.

21. The LiDAR of any one of claims 16 to 20, wherein the LiDAR comprises multiple channels, each of the channels comprises a laser and a corresponding detector for detection in a particular FOV range, and the drive unit is further configured to:

   acquire a region of interest in a FOV of the LiDAR; and
   for a laser of a channel whose FOV range falls within the ROI, increase transmission power of the laser in the operation S11.

22. The LiDAR of any one of claims 16 to 20, wherein the drive unit is configured to: increase the transmission power of the laser and decrease a value of K in the operation S 11.

23. The LiDAR of any one of claims 16 to 20, wherein the LiDAR comprises multiple channels, each of the channels comprises a laser and a corresponding detector for detection in a particular FOV range, and the drive unit is further configured to:

   acquire a region of interest in a FOV of the LiDAR; and
   for a laser of a channel whose FOV range falls within the ROI, increase a value of N.

24. The LiDAR of any one of claims 15 to 17, wherein the detection data is stored in a first storage manner or a second storage manner, wherein the first storage manner comprises: storing the intensity information based on a weight of the time information at a first time precision, wherein the first time precision is a time interval between any two adjacent first time scales and M times a time resolution of detection data of the LiDAR, M>1, and the weight is associated with a time interval between the time information and at least one first time scale; and the second storage manner comprises: storing the intensity information based on a time resolution of the LiDAR.

25. The LiDAR of claim 24, wherein a first set of detection data is stored in the first storage manner, and a second set of detection data is stored in the second storage manner.

26. The LiDAR of claim 24, wherein the weight comprises a first weight and a second weight, the first weight is associated with a time interval between the time information and one of adjacent first time scales, the second weight is associated with a time interval between the time information and the other one of adjacent first time scales, and the first storage manner comprises: storing the intensity information based on the first weight and the second weight, respectively, at the first time precision.

27. The LiDAR of any one of claims 16 to 20, wherein the drive unit is further configured to perform the following operation: S13: changing a detection window of a detector based on a FOV of the obstacle during the $(K + 1)^{th}$ to $N^{th}$ detection sweeps to obtain detection data of the detector within the detection window.

28. The LiDAR of claim 27, wherein the operation S13 further comprises at least one of:

   activating the detector only within the detection window; or
   maintaining the detector activated, and reading only the detection data of the detector within the detection window.

**10**

S11: obtain detection data of K detection sweeps in detection cycle, where detection data includes time information and intensity information corresponding to time information, detection cycle includes N detection sweeps, N is integer greater than 1, K is integer, and $1 \leq K < N$

S12: change light-emitting scheme of laser during $(K + 1)^{th}$ to $N^{th}$ detection sweeps in detection cycle based on detection data of K detection sweeps

S13-A: receive, by detector, echo and acquire detection data

FIG. 1A

**10**

S11: obtain detection data of K detection sweeps in detection cycle, wherein detection data includes time information and intensity information corresponding to time information, detection cycle includes N detection sweeps, N is integer greater than 1, K is integer, and $1 \leq K < N$

S12: change light-emitting scheme of laser during $(K + 1)^{th}$ to $N^{th}$ detection sweeps in detection cycle based on detection data of K detection sweeps

S13-B: change detection window of detector based on field of view of obstacle during $(K + 1)^{th}$ to $N^{th}$ detection sweeps to obtain detection data of detector within detection window

FIG. 1B

## S12

S121: identify field of view where obstacle exists based on detection data of K detection sweeps

S122: for field of view where no obstacle exists, control laser corresponding to field of view during $(K + 1)^{th}$ to $N^{th}$ detection sweeps in detection cycle using one or more of following:
not transmit detection pulse;
control the laser to transmit detection pulse at reduced power; and
when plurality of lasers corresponds to current detection cycle, control part of lasers to transmit detection pulse

FIG. 2

FIG. 3

Object

| Fov 1_1 | Fov 1_2 | Fov 1_3 | ... | Fov 1_n-1 | Fov 1_n |
|---------|---------|---------|-----|-----------|---------|
| Fov 2_1 | Fov 2_2 | Fov 2_3 | ... | Fov 2_n-1 | Fov 2_n |
| ... | ... | ... | ... | ... | ... |
| Fov m_1 | Fov m_2 | Fov m_3 | ... | Fov m_n-1 | Fov m_n |

Horizontal FOV

Vertical FOV

LiDAR

(A)

(B)

(C)

L11  L12  L13  L14  L15  L1n
L21  L22  L23
L31  L32  L33
L51

Lm1  Lm2  Lm3  Lm4  Lm5  Lmn

FIG. 4

Object

Slice 1   Slice 2        Slice k        Slice C-1   Slice C

ToF started

ToF stoped

FIG. 5

Fov 1_1    Fov 1_n

Fov 2_2  Fov2_3

Fov 3_2  Fov 3_3

Fov m_1    Fov m_n

P

10000

8000

6000

4000

2000

0

0   1    100  101  102  103    300    t/ns

(C)

First 300 detection sweeps

LiDAR

L11   L12   L13   L14   L15   L1n

L22   L23

L32   L33

Lm1   Lm2   Lm3   Lm4   Lm5   Lmn

(A)                    (B)

FIG. 6

FIG. 7

Total of 400 detection sweeps

FIG. 8

**20**

S21: perform K detection sweeps, and accumulate detection data to obtain histogram of K detection sweeps

S22: divide detection field of view into m*n sub-fields of view, and divide time of flight (TOF) into C time slices

S23: perform, by signal processor unit of readout circuit, basic operation on histogram, and generate Table 1 and Table 2

S24: determine whether corresponding laser emits light or not and/ or light-emitting mode during subsequent the N-K detection sweeps based on Table 1; based on Table 1 and Table 2, determine whether corresponding detector and readout circuit are enabled and within which time slice corresponding detector and readout circuit are enabled during N-K detection sweeps

S25: accumulate detection data of N-K detection sweeps with histogram data obtained from first K detection sweeps to obtain data of N repeated detection sweeps

S26: calculate and calibrate ranging information for data in the time slice where the obstacle is present

FIG. 9

**22**

221-1    221-2  ...    221-n

SPAD

TDC    TDC    TDC

Memory    Memory    Memory

FIG. 10

0    1    2    3    4    5    ...    15    ...    t

**Sweep a**    tp1    tp3    tp5    tp16
cnt1a    cnt3a    cnt5a    cnt16a

**Sweep b**    tp2    tp5
cnt2b    cnt5b

Memory    | cnt1a | cnt2b | cnt3a |  | cnt5a+
cnt5b | ... | cnt16a | ... |

R1    R2    R3    R4    R5    R16

FIG. 11

FIG. 12

FIG. 13

FIG. 14

FIG. 15

**200**

FIG. 16

## INTERNATIONAL SEARCH REPORT

| International application No. |
| --- |
| **PCT/CN2022/081306** |

**A. CLASSIFICATION OF SUBJECT MATTER**

G01S 17/93(2020.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNTXT, ENTXTC, CNABS, WPABSC: 激光, 雷达, 探测, 扫描, 强度, 距离, 反射率, 发射功率, 视场, 区域, laser, ladar, lidar, scan+, distance, reflectivity, ROI

**C. DOCUMENTS CONSIDERED TO BE RELEVANT**

| Category* | Citation of document, with indication, where appropriate, of the relevant passages | Relevant to claim No. |
| --- | --- | --- |
| X | CN 112099053 A (HESAI PHOTONICS TECHNOLOGY CO., LTD.) 18 December 2020 (2020-12-18)<br>      description, paragraphs 6-36 | 1, 9-14, 16, 24-28 |
| Y | CN 112099053 A (HESAI PHOTONICS TECHNOLOGY CO., LTD.) 18 December 2020 (2020-12-18)<br>      description, paragraphs 6-36 | 2-8, 15, 17-23 |
| Y | CN 112616318 A (SUTENG INNOVATION TECHNOLOGY CO., LTD.) 06 April 2021 (2021-04-06)<br>      description, paragraphs 86 and 91 | 2-8, 15, 17-23 |
| X | CN 109884610 A (LEISHEN INTELLIGENT SYSTEM CO., LTD.) 14 June 2019 (2019-06-14)<br>      description, paragraphs 44-90 | 1, 9-14, 16, 24-28 |
| A | US 2020348402 A1 (HESAI PHOTONICS TECHNOLOGY CO., LTD.) 05 November 2020 (2020-11-05)<br>      entire document | 1-28 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 May 2022** | **31 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/081306**

**C.    DOCUMENTS CONSIDERED TO BE RELEVANT**

| Category* | Citation of document, with indication, where appropriate, of the relevant passages | Relevant to claim No. |
|---|---|---|
| A | CN 109597093 A (SUTENG INNOVATION TECHNOLOGY CO., LTD.) 09 April 2019 (2019-04-09) entire document | 1-28 |
| A | US 2010165323 A1 (FIESS, R. et al.) 01 July 2010 (2010-07-01) entire document | 1-28 |
| A | US 2018149747 A1 (THALES) 31 May 2018 (2018-05-31) entire document | 1-28 |

Form PCT/ISA/210 (second sheet) (January 2015)

**INTERNATIONAL SEARCH REPORT**
**Information on patent family members**

International application No.

**PCT/CN2022/081306**

| Patent document cited in search report | | | Publication date (day/month/year) | Patent family member(s) | | | Publication date (day/month/year) |
|---|---|---|---|---|---|---|---|
| CN | 112099053 | A | 18 December 2020 | WO | 2022037345 | A1 | 24 February 2022 |
| CN | 112616318 | A | 06 April 2021 | WO | 2021051722 | A1 | 25 March 2021 |
| CN | 109884610 | A | 14 June 2019 | WO | 2020182137 | A1 | 17 September 2020 |
| | | | | CN | 109884610 | B | 08 October 2021 |
| US | 2020348402 | A1 | 05 November 2020 | JP | 2021510819 | A | 30 April 2021 |
| | | | | KR | 20200104871 | A | 04 September 2020 |
| | | | | EP | 3742200 | A1 | 25 November 2020 |
| | | | | WO | 2019140792 | A1 | 25 July 2019 |
| | | | | EP | 3742200 | A4 | 03 March 2021 |
| | | | | CN | 108072880 | A | 25 May 2018 |
| CN | 109597093 | A | 09 April 2019 | None | | | |
| US | 2010165323 | A1 | 01 July 2010 | DE | 102008055159 | A1 | 01 July 2010 |
| | | | | US | 8446571 | B2 | 21 May 2013 |
| US | 2018149747 | A1 | 31 May 2018 | FR | 3059433 | A1 | 01 June 2018 |
| | | | | FR | 3059433 | B1 | 17 May 2019 |
| | | | | US | 10732279 | B2 | 04 August 2020 |

Form PCT/ISA/210 (patent family annex) (January 2015)